# EUROPEAN PATENT SPECIFICATION

(11) **EP 2 881 964 B1**
(45) Date of publication and mention of the grant of the patent: **24.08.2016**
(21) Application number: 14191525.6
(22) Date of filing: 03.11.2014
(51) Int. Cl.: H01H 71/00, H02H 1/00

(54) **Modular overload relay assembly with a modular communication and human interface module**
Modulare Überlastrelaisanordnung mit modularer Kommunikation und menschliches Schnittstellenmodul
Ensemble de relais de surcharge modulaire avec une communication modulaire et module d'interface humaine

(30) Priority: 11.11.2013 US 201314076745
(43) Date of publication of application: 10.06.2015
(73) Proprietor: Rockwell Automation Technologies, Inc., Mayfield Heights, OH 44124 (US)
(72) Inventor: Glaser, William T., Waukesha, WI Wisconsin 53189 (US); Kotze, Theron, St. Paul, MN Minnesota 55104 (US); Flood, James J., Brown Deer, WI Wisconsin 53223 (US); Yerukhimov, Leonid, Thiensville, WI Wisconsin 53092 (US); Waydick, Eric, Saint Francis, WI Wisconsin 53235 (US)
(74) Representative: Grünecker Patent- und Rechtsanwälte PartG mbB

(56) References cited:
- EP-A1- 2 584 580
- EP-A2- 0 687 078
- US-A1- 2010 195 763

## Description

### BACKGROUND OF THE INVENTION

The subject matter disclosed herein relates generally to overload relays, and, more particularly, to a modular overload assembly adapted to couple to a contactor assembly.

Overload relays are current sensitive relays that can be used to disconnect power from equipment when an overload or other sensed condition exists. They are normally used in conjunction with an electromechanical contactor, and are designed to protect an electric motor or other electronic devices.

In a typical installation, the contactor provides three contacts, one associated with each of up to three phases of power, that are closed by an electromagnetically operated contactor coil. The overload relay includes current sensing elements that are wired in series with the three phases passing through the contactor to the motor. In this way, the overload relay can monitor current flowing in the three phases through the contactor, and based on current magnitude and duration, may interrupt the current flow through the contactor coil circuit to open the contactor contacts when an overload occurs. For this purpose, the overload relay includes a contact or contacts that can be used to control the contactor coil and/or provide a signal indicating an overload or other sensed condition.

One difficulty associated with overload relays in general is the large number of catalog numbers that need to be manufactured and warehoused. Typically, an overload relay is designed for only a small current range, and possibly a fixed set of functional and communication options. If you are a manufacturer, you want to offer a full product line, which means offering a large variety of overload relays that operate at their respective currents for a variety of communication protocols. If you are an integrator or an OEM using overload relays, this mean that you need to have available a large selection of overload relays for your application's needs. Attempts to accommodate overload relays to operate in a wider range of applications results in increased size, cost, and heat generation.

When modular components are used, the modules require reliable electronic interconnection between the modules. One primary problem is to minimize or eliminate electrical contact wear caused by relative mechanical motion between modules. When connection points are not visible for a user, this presents an extra burden on minimizing relative motion between modules. An overload relay which is directly mounted to an electromechanical contactor further exacerbates this burden by subjecting the device to millions of shock-like operations.

Still other difficulties associated with overload relays include a lack of built in voltage sensing capabilities. In order to sense voltage, an add on module is required that increases the width of the overload relay, increases cost, and requires further wiring to be completed by the user. In addition, control wiring needs to be completed by the user when the overload relay is wired to a contactor.

There is a need, therefore, for a modular overload relay assembly that can sense voltage and still allow a significant reduction in catalog numbers while still providing a large array of product combinations for rated current values and communication protocols. There is also a need for an easy yet reliable configuration for a user to mechanically and electrically connect modules in the field and connect an overload relay to a contactor. Finally, there is also a need for a human interface to allow for a user to select certain settings, as well as to display the current status of the overload.

US 2010/195763 A1 discloses a first and a second protective relay adapted to provide for example, overcurrent protection for the transmission line. The first and second protective relays are also adapted to communicate via a communication link. The first protective relay is shown as the transmitting relay and includes, *inter alia,* a "transmit" module. The second protective relay is shown as the receiving relay and includes, *inter alia,* a "receive" module. The transmit module and the receive module are operatively connected via the communication link. In addition tc output status indication bits, each of the transmit and receive modules is capable of transmitting/receiving other types of channel data in the form of serial messages. The relay-to-relay direct communication system is adapted to (1) directly communicate output status indication bits which represent the result of protection functions by one of the relays, (2) directly communicate selected analog values representing one or more functions of the relay, (3) directly communicate virtual terminal data provided by a user to one of the relays via the other relay, (4) monitor the communication link between the two relays, (5) determine communication link availability and (6) provide time synchronization.

It is the object of the present invention to provide a system and method for improving the safety of an overload relay system.

This object is solved by the subject matter of the independent claims.

Embodiments are defined by the dependent claims.

### SUMMARY

The present embodiments overcomes the aforementioned problems by providing a modular overload relay assembly that can sense voltage and allow a significant reduction in catalog numbers while providing a large array of product combinations, including communication protocols. The modular overload relay can provide an easy yet reliable configuration for a user to mechanically and electrically connect modules in the field and connect the overload relay to a contactor.

Accordingly, embodiments of the present invention include a method for communicating between a first modular electronic device and a second modular electronic device. The method comprises transmitting a first serial data frame from the first modular electronic device to the second modular electronic device; the first serial data frame including at least a status information, a heartbeat challenge, and a frame check character; the second modular electronic device receiving the first serial data frame; the second modular device detecting and validating the heartbeat challenge in the first serial data frame; the second modular electronic device transmitting a second serial data frame from the second modular electronic device to the first modular electronic device; the second serial data frame including at least a heartbeat challenge response, and a frame check character response; and, the first modular electronic device receiving the second serial data frame by the first modular electronic device and detecting and validating the heartbeat challenge response in the second serial data frame.

In accordance with another embodiment of the invention, embodiments of the present invention include a modular electronic overload system comprising a first modular electronic device and a second modular electronic device. The system further comprises the first modular electronic device operable to transmit a first serial data frame to the second modular electronic device; the first serial data frame including at least a status information, a heartbeat challenge and a frame check character. The second modular device has a local human interface, the local human interface having a plurality of indicating lights. The second modular electronic device is operable to validate the heartbeat challenge, and display at least a portion of the status information on the local human interface. The second modular electronic device is operable to transmit a second serial data frame to the first modular electronic device; the second serial data frame including a heartbeat challenge response and a frame check character response. At least one of the first modular electronic device and the second modular electronic device are operable to generate a fault condition indicating a communication error between the first modular electronic device and the second modular electronic device. And, the first modular electronic device is operable to place the modular electronic overload relay system in a safe state when no heartbeat response is received by the first modular electronic device, indicating a loss of serial communication between the first modular electronic device and the second modular electronic device.

In accordance with another embodiment of the invention, embodiments of the present invention include a modular electronic overload system comprising of a control module and a communication module. The system further comprises the control module and the communication module operable to serially communicate using at least a two-wire communication protocol. The control module is operable to transmit a first serial data frame to the communication module; the first serial data frame including at least a status information, and a heartbeat challenge. The communication module has a local human interface; the local human interface having a plurality of indicating lights. The communication module is operable to receive the first serial data frame from the control module. The communication module is operable to validate the heartbeat challenge and display at least a portion of the status information on the local human interface. The communication module is operable to transmit a second data frame to the control module, the second serial data frame including a heartbeat challenge response. At least one of the control module and the communication module are operable to generate a fault condition indicating a communication error between the control module and the communication module. And, the control module is operable to place the modular electronic overload relay system in a safe state when no heartbeat response is received by the control module, indicating a loss of serial communication between the first modular electronic device and the second modular electronic device.

To the accomplishment of the foregoing and related ends, the embodiments, then, comprise the features hereinafter fully described. The following description and the annexed drawings set forth in detail certain illustrative aspects of the invention. However, these aspects are indicative of but a few of the various ways in which the principles of the invention can be employed. Other aspects, advantages and novel features of the invention will become apparent from the following detailed description of the invention when considered in conjunction with the drawings.

### BRIEF DESCRIPTION OF THE DRAWINGS

The embodiments will hereafter be described with reference to the accompanying drawings, wherein like reference numerals denote like elements, and:
FIG. 1 is a perspective exploded view of a modular overload relay assembly, according to embodiments of the present invention;
FIG. 2 is a perspective view of the modular overload relay assembly of FIG. 1 in a horizontal orientation, and coupled to a contactor, the contactor mounted to din rail;
FIG. 3 is a plan view of the modular overload relay assembly of FIG. 2 in a horizontal orientation, and coupled to the contactor;
FIG. 4 is an exploded view of a controller module of the modular overload relay assembly;
FIG. 5 is an exploded view of a communication module of the modular overload relay assembly;
FIG. 6 is a perspective view of a latch plate in a latched position;
FIG. 7 is a perspective view of the latch plate of FIG. 6 in an unlatched position;
FIG. 8 is a close-up perspective side view of a communication module in a position to be coupled to a controller module, and showing the respective connectors in an unmated state;
FIG. 9 is a close-up perspective side view of the communication module coupled to the controller module, and showing the respective connectors in a mated, transitional state;
FIG. 10 is a close-up perspective side view of the communication module coupled to the controller module, and showing the respective connectors in a mated, fully latched, in use state;
FIGS. 11 and 12 are side views of a latch plate, and showing a biasing member in an unlatched state in relation to a connector carrier and associated cam;
FIGS. 13 and 14 are perspective views of the latch plate and biasing member of FIG. 11 in the unlatched state;
FIG. 15 is a close-up perspective side view of the latch plate and biasing member in an unlatched state after modules have been coupled together but before the modules have been latched together;
FIGS. 16 and 17 are side views of the latch plate, and showing the biasing member in a transitional state in relation to the connector carrier and associated cam;
FIGS. 18 and 19 are perspective views of the latch plate and biasing member of FIG. 16 in the transitional state;
FIGS. 20 and 21 are side views of the latch plate, and showing the biasing member in a fully latched, in use state in relation to the connector carrier and associated cam;
FIGS. 22 and 23 are perspective views of the latch plate and biasing member of FIG. 20 in the fully latched, in use state;
FIG. 24 is a close-up perspective side view of a controller module in a position to be coupled to a sensing module, and showing the respective connectors in an unmated state;
FIG. 25 is a perspective view of a controller module with section of the housing removed to expose the interior, and showing a flexible circuit board coupled to a controller module circuit board, the flexible circuit board coupled to a front electrical connector and a back electrical connector;
FIG. 26 is a side view of the flexible circuit board of FIG. 25, and showing connector carriers coupled to the flexible circuit board;
FIG. 27 is an exploded view of a sensing module of the modular overload relay assembly, according to embodiments of the present invention;
FIG. 28 is a partial side perspective view of a voltage sensor contact coupled to a circuit board and a phase conductor in a box lug, with a load wire in the box lug;
FIG. 29 is a partial bottom perspective view of the voltage sensor contact coupled to the circuit board and the phase conductor in the box lug;
FIG. 30 is a side view of the voltage sensor contact coupled to the circuit board and the phase conductor in the box lug, with the load wire in the box lug;
FIG. 31 is a perspective view of the sensing module circuit board with three voltage sensor contacts coupled to the circuit board, one for each phase;
FIGS. 32 and 33 are perspective views of embodiments of a voltage sensor contact;
FIG. 34 is a perspective view of a preformed coil interface, according to embodiments of the present invention, prior to being coupled to the modular overload relay assembly and a contactor;
FIG. 35 is a perspective view of the preformed coil interface of FIG. 34 after being coupled to the modular overload relay assembly and a contactor;
FIG. 36 is a schematic diagram of the preformed coil interface coupled to the modular overload relay assembly and a contactor;
FIGS. 37 and 38 are views of the preformed coil interface, showing internal wiring and a molded insulator;
FIG. 39 is a diagram of an I²C data frame to be transmitted from a control module to a communication module;
FIG. 40 is a diagram of an I²C data frame to be transmitted from a communication module to a control module;
FIG. 41 is a flow chart illustrating a control module heartbeat messaging process; and
FIG. 42 is a flow chart illustrating a communication module heartbeat messaging process.

### DETAILED DESCRIPTION OF THE INVENTION

The following discussion is presented to enable a person skilled in the art to make and use embodiments of the invention. Various modifications to the illustrated embodiments will be readily apparent to those skilled in the art, and the generic principles herein can be applied to other embodiments and applications without departing from embodiments of the invention. Thus, embodiments of the invention are not intended to be limited to embodiments shown, but are to be accorded the widest scope consistent with the principles and features disclosed herein.

The detailed description is to be read with reference to the figures. The figures depict selected embodiments and are not intended to limit the scope of embodiments of the invention. Skilled artisans will recognize the examples provided herein have many useful alternatives and fall within the scope of embodiments of the invention. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items.

Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings. As used herein, unless expressly stated otherwise, "connected" means that one element/feature is directly or indirectly connected to another element/feature, and not necessarily electrically or mechanically. Likewise, unless expressly stated otherwise, "coupled" means that one element/feature is directly or indirectly coupled to another element/feature, and not necessarily electrically or mechanically.

As used herein, the term "processor" may include one or more processors and memories and/or one or more programmable hardware elements. As used herein, the term "processor" is intended to include any of types of processors, CPUs, microprocessors, microcontrollers, digital signal processors, or other devices capable of executing software instructions.

Embodiments of the invention may be described herein in terms of functional and/or logical block components and various processing steps. It should be appreciated that such block components may be realized by any number of hardware, software, and/or firmware components configured to perform the specified functions. For example, an embodiment may employ various integrated circuit components, e.g., digital signal processing elements, logic elements, diodes, etc., which may carry out a variety of functions under the control of one or more processors or other control devices. Other embodiments may employ program code, or code in combination with other circuit components.

The various embodiments of the invention will be described in connection with a modular overload relay adapted to couple to an electromagnetic contactor. That is because the features and advantages of the invention are well suited for this purpose. Still, it should be appreciated that the various aspects of the invention can be applied in other overload relay configurations, not necessarily modular, and that are capable of stand-alone operation or that can be coupled to other devices, including solid state contactors.

Specifically, embodiments of the invention provide a modular overload relay assembly capable of providing multiple functions. A first portion of the modular overload relay assembly can be a sensing module having a first housing supporting integrated phase current conductors and load side power terminals, where the integrated phase current conductors are preformed and receivable by a contactor. The integrated phase current conductors conduct load current from the contactor (line side of the modular overload relay assembly) through the modular overload relay assembly to the load side terminals, and current sensing devices and associated sensing circuitry monitors the current in the phase current conductors to produce a signal proportional to the current. The sensing module includes a sensing module electrical connector extending from a front side of the first housing and communicating with the sensing module circuitry.

A second portion of the multi-function overload relay can be a controller module having a second housing attachable to the front side of the sensing module. The controller module can include a front side electrical connector located on a front side of the controller module and a back side electrical connector located on a back side of the controller module. The back side electrical connector can mate with the sensing module electrical connector when the controller module is coupled to the front side of the sensing module housing. Circuitry within the controller module can communicate with the sensing module circuitry to augment its function. The second housing of the controller module can include terminals providing an interface for power and input and output signals.

A third portion of the multi-function overload relay can be a communication module having a third housing attachable to the front side of the controller module. The controller module electrical connector located on the front side of the controller module can mate with a communication module electrical connector when the communication module is coupled to the front wall of the controller module housing. Circuitry within the communication module can communicate with the controller module circuitry and the sensing module circuitry to augment its function. Use of the communication module to provide an optional network connection to an overload relay can reduce the cost of the sensing module and/or controller module. Additionally, the communication module can display information on the status of the control module to a user with a series of indicating lights. The communication module can also allow the user to select certain parameters for the overload relay via an interface device on the communication module.

In this configuration, a physical separation of functions of the modules can be incorporated into many electronic devices, including a modular overload relay, allowing a variety of overload relays of different functions to be offered in a cost-effective basis. The electrical connectors between the modules allow division of functions to be accomplished with minimal interface cost. The modules can utilize an attachment configuration and method that provides an advantage for many electronic devices and environments that have the potential for high vibration, including overload relays in industrial environments. The attachment configuration and method may not increase the cost burden of any of the modules, and yet that is robust against the potential high vibration environment of an overload relay, especially when mounted directly to a contactor.

The communication between a control module and a communication module for passing status information between the control module and the communication module can be implemented in many ways. In one embodiment, a two-wire serial communication protocol, such as Inter-Integrated Circuit (hereinafter "I2C") can be used. The integration of a two-wire communication protocol between the control module and the communication module reduces the number of I/O pins, thereby reducing cost and potential failure points. Other embodiments of the current invention can use a one-wire communication protocol. Further embodiments can use communication protocols utilizing three or more wires for communication. Additional embodiments can utilize a wireless communication method to provide communication between the communication module and the control module.

Any of the circuitry described herein can provide functions including motor jam detection, current imbalance detection, and ground fault current detection, for example. The circuitry can provide remote reset or trip of the overload relay. Embodiments of the invention can provide remote resetting as an optional feature, thereby reducing the cost of the overload relay assembly.

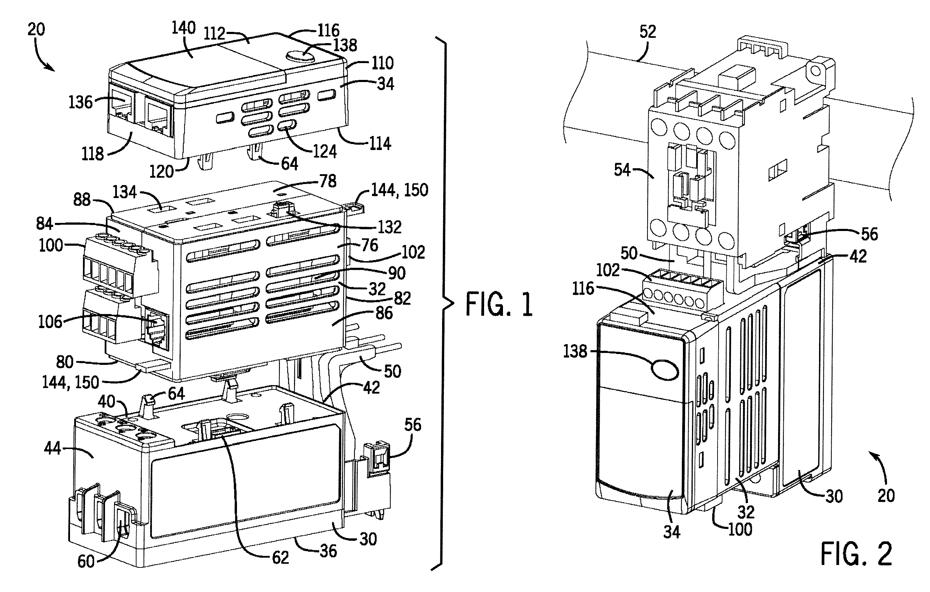

Referring now to FIGS. 1 and 2, a modular overload relay assembly 20 can include a sensing module 30, a controller module 32 and a communication module 34. Each of the modules 30, 32 and 34 will be described in greater detail below. The orientation of the modules will be described in terms of a horizontal stack of modules as they would be viewed while the overload relay assembly 20 is mounted to a contactor 54, and the contactor mounted to din rail 52 on a panel, typically in a cabinet and ready for use (see FIG. 2).

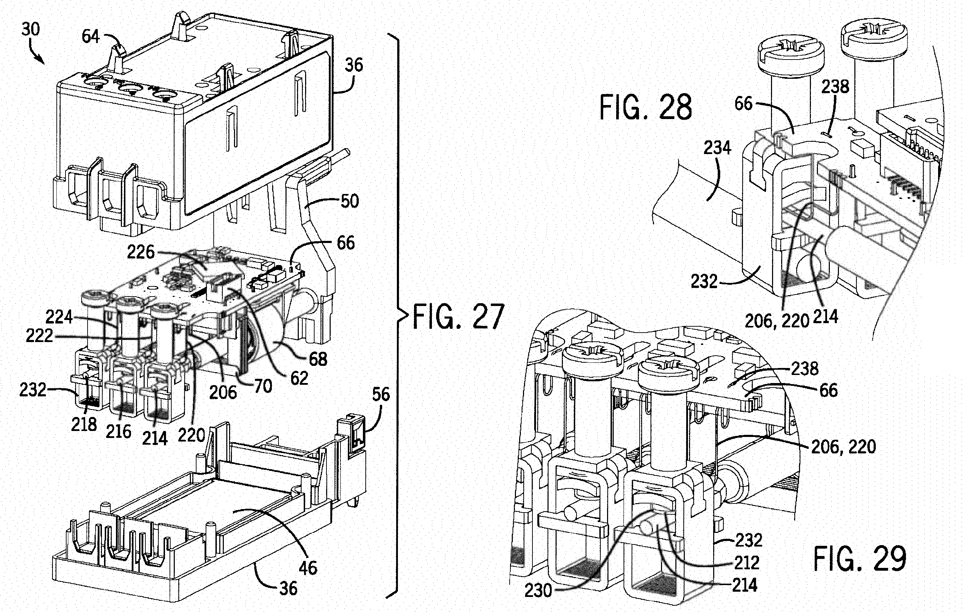

The sensing module 30 can include a housing 36 with a front side 40, top side 42, bottom side 44, and interior 46. Integrated phase current conductors 50 can extend from the top side 42, and are shown extending outwardly to be received by corresponding screw clamp terminals (not shown) of a contactor 54. Integrated phase current conductors 50 can comprise three preformed and prefabricated conductors of a three-phase power system. A mechanical contactor latch 56 can also extend from the top side 42 to provide a further mechanical connection between the contactor 54 and the overload relay assembly 20. Load side power terminals 60 can be accessible from the bottom side 44 to provide electrical access to the integrated phase current conductors 50. A sensing module electrical connector 62 and latching hooks 64 can extend from the front side 40 to provide an electrical and a mechanical connection to the controller module 32. The interior 46 of the sensing module 30 can include a sensing module circuit board 66 including current sensing devices 68 and 70, such as current transformers (see FIG. 27).

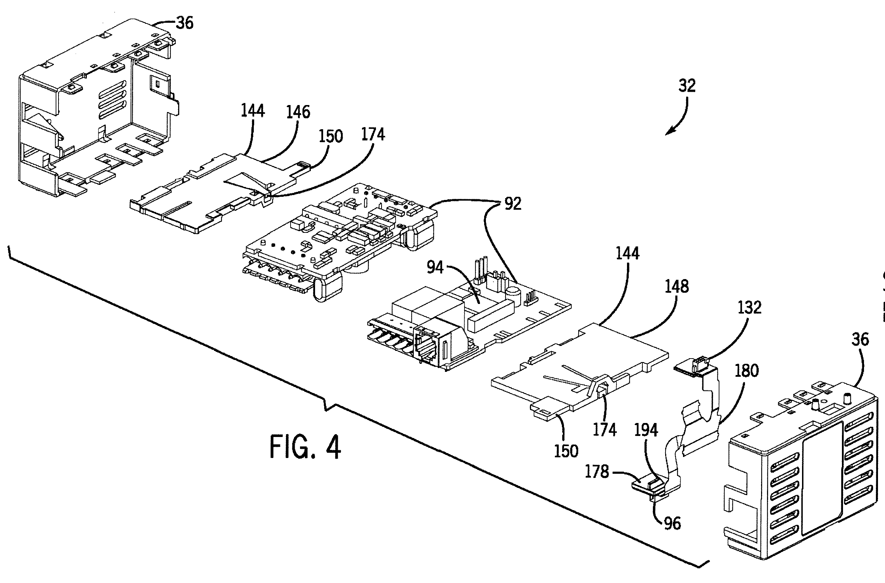

The controller module 32 can include a housing 76 with a front side 78, a back side 80, a top side 82, a bottom side 84, side walls 86 and 88, and interior 90. The controller module back side 80 can mechanically attach to the front side 40 of the sensing module 30 so that a back side electrical connector 96 (not visible in FIG. 1) on the controller module 32 can mate with the sensing module electrical connector 62 when the controller module 32 is attached to the sensing module 30. Latching hooks 64 attached to or molded into the sensing module housing 36 can engage corresponding holes 98 (not visible in FIG. 1) in the back side 80 of the controller module 32. In an alternative embodiment, screws or other known coupling means may be used to mechanically couple the controller module 32 to the sensing module 30. The interior 90 of the controller module 32 can include a controller module circuit board 92 including a processor 94, for example (see FIG. 4).

In some embodiments, terminal block 100 and/or 102 can extend from either or both of the top side 82 and the bottom side 84, and can provide a pass through feature between terminal block 100 and terminal block 102. The terminal block 100, 102 can provide an access point for providing control power to the control module 32, which in turn can provide power to the sensing module 30 and the communications module 34. The controller module 32 can convert the control power to different voltage levels for the sensing module 30 and the communications module 32. Port 106 can also be accessed on either or both of the top side 82 and the bottom side 84. The port 106 can be used to couple to expansion I/O and/or a human machine interface (HMI), for example.

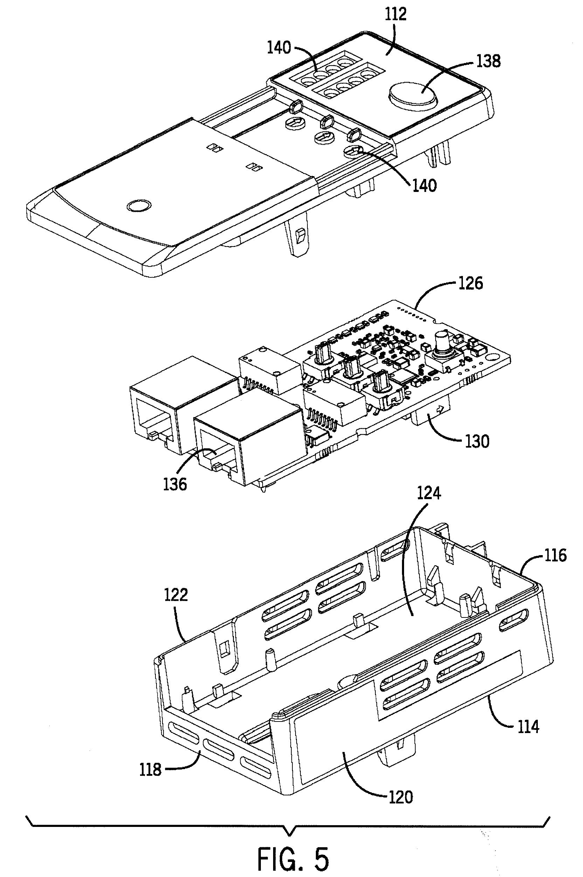

The communication module 34 can include a housing 110 with a front side 112, a back side 114, a top side 116, a bottom side 118, side walls 120 and 122, and interior 124. The communication module back side 114 can mechanically attach to the front side 78 of the controller module 32 so that a back side electrical connector 130 (not visible in FIG. 2) on the communication module 34 can mate with a front side electrical connector 132 on the controller module 32 when the communication module 34 is attached to the controller module 32. Latching hooks 64 attached to or molded into the communication module housing 110 can engage corresponding holes 134 in the front side 78 of the controller module 32. In an alternative embodiment, screws or other known coupling means may be used to mechanically couple the communication module 34 to the controller module 32. The interior 124 of the communication module 34 can include a communication module circuit board 126 (see FIG. 5).

One or more communication ports 136 can be accessed on the front side 112, top side 116 and/or the bottom side 118. In some embodiments, the communication module 34 can be a wireless communication module, and therefore may not include a communication port. The communication module 34 can provide support for a multitude of communication protocols, including, but not limited to, single and dual port Ethernet, DeviceNet, ProfiBus, and any other known and future developed protocols. In other embodiments, the communication module 34 may not support external communication protocols. Where the communication module does not support external communications, the communication module 34 can provide a user input device that can allow the user to locally set certain operating parameters. In some embodiments, the user input device can be a plurality of at least one of DIP and rotary type switches.

The front side 112 of the communication module 34 can also include an overload reset button 138 to provide a manual or electrical reset function for the overload relay 20 to re-open a normally open contact and/or close a normally closed contact. It is to be appreciated that the overload reset button 138 can be located on any of the modules. The communication module 34 can also include other known inputs and outputs 140, such as switches to adjust overload relay parameters and/or setting node address, and status LEDs for power, Trip/Warn, network activity, and the like (see FIG. 5).

Referring to FIG. 4, in order to mechanically attach the controller module 32 to the sensing module 30, and the communication module 34 to the controller module 32, in addition to the latching hooks 64, in some embodiments, the controller module 32 can include at least one latch plate 144. In the embodiment shown in FIG. 2, the controller module 32 includes a front latch plate 146 and a back latch plate 148. In some embodiments, the latch plate 144 can be the same for the front latch plate 146 and the back latch plate 148. In other embodiments, one latch plate 144 can secure both the front side 78 and the back side 80 of the controller module 32. In yet other embodiments, the latch plate 144 can slide on a side wall 86 and/or 88 of the controller module 32 and latch one or both the front side 78 and the back side 80 of the controller module 32.

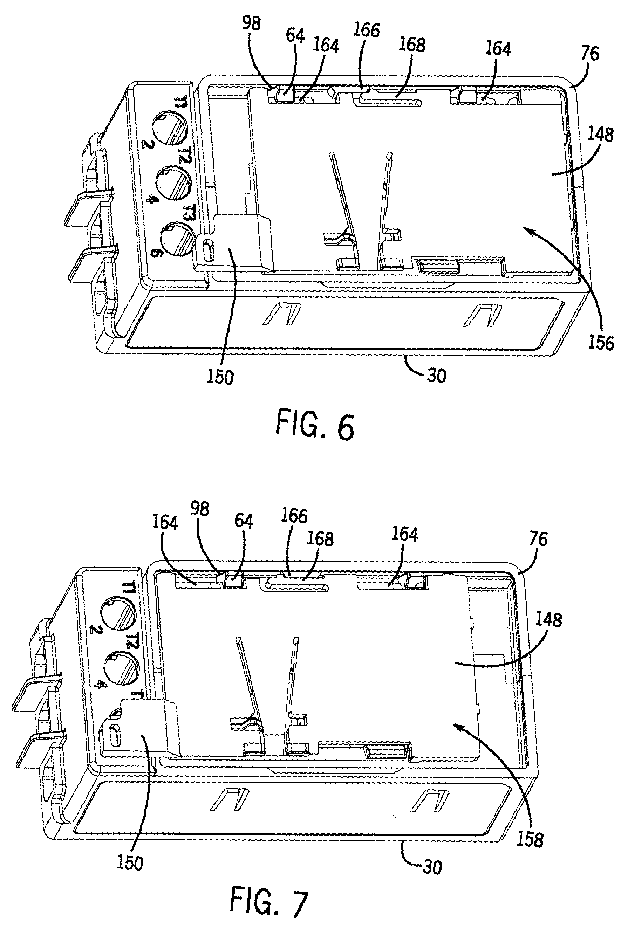

Referring to FIGS. 4, 6 and 7, each latch plate 146, 148 can include a latch handle 150. The latch plates 146, 148 can be used to mechanically engage the latching hooks 64 that protrude into the front side 78 and back side 80 of the controller module 32 when the controller module 32 is attached to the sensing module 30, and the communications module 34 is attached to the controller module 32. For example, the latch handle 150 can be used to manually slide the latch plate 148 into a latched position 156 (see FIG. 6) to secure the controller module 32 to the sensing module 30. To disengage the controller module 32 from the sensing module 30, the latch handle 150 can be used to manually slide the latch plate 148 into an unlatched position 158 (see FIG. 7) so the controller module 32 can be removed from the sensing module 30. The latch plate 148 (and 146) can include a hook edge 164 that, when slid into the latched position 156, slides under the latching hook 64 to restrict the latching hook 64 from being removed from the latching hook holes 98. A detent 166 on the controller module housing 76 can engage a biased arm 168 on the latch plate 148 (and 146) to retain the latch plate 148 in the latched 156 or unlatched 158 position.

In order to electrically couple the controller module 32 to the sensing module 30, and the communication module 34 to the controller module 32, the sensing module front side electrical connector 62 can be coupled to the controller module back side electrical connector 96, and the communication module back side electrical connector 130 can be coupled to the controller module front side electrical connector 132.

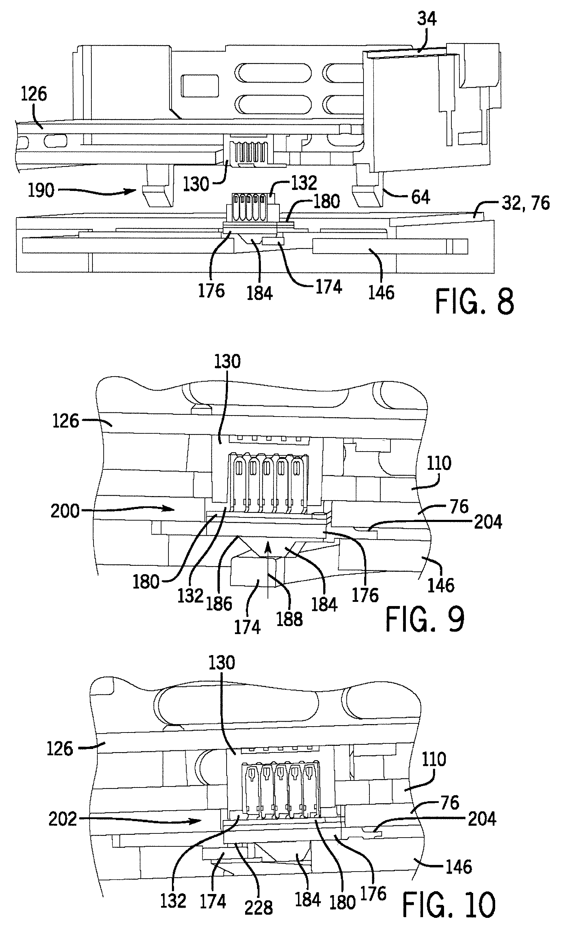

Referring to FIG. 4, in some embodiments, a latch plate 144 can include a biasing member 174. The biasing member 174 can be an integral component of the latch plate 144, or the biasing member 174 can be an extended member, such as a spring, coupled to the latch plate 144, for example. In some embodiments, the biasing member 174 can be a plastic spring integral with the latch plate 144, or the biasing member 174 could be a metal spring coupled to the latch plate. The biasing member 174 can interact with a connector carrier 176 (see FIG. 8) to provide a connector mating force. Use of the biasing member 174 and the connector carrier 176 can facilitate a design that can employ overtravel to accommodate tolerance stackup.

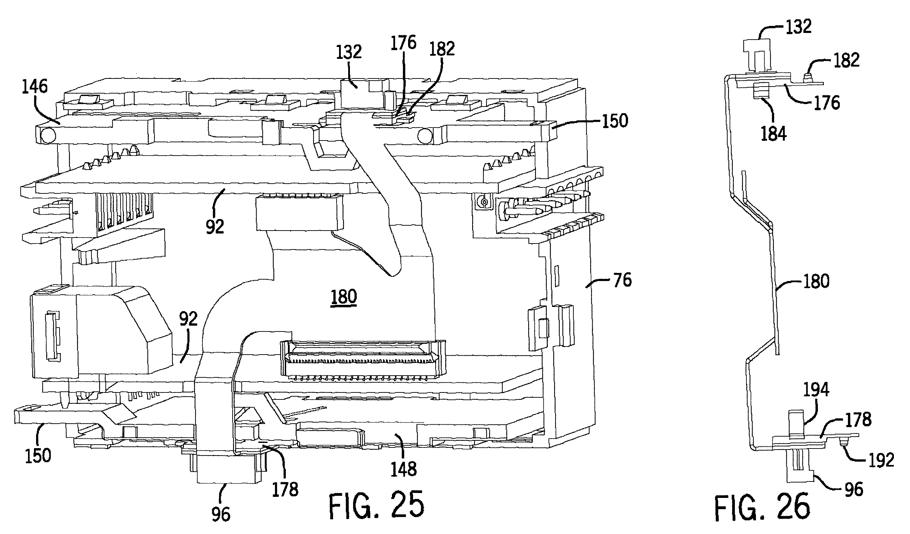

Referring to FIG. 8 as a representative example, a portion of the communication module 34 is shown prior to being coupled to the controller module 32. In some embodiments, the communication module back side electrical connector 130 can be rigidly and electrically connected to the communication module circuit board 126. The controller module front side electrical connector 132 can be electrically connected to a flexible circuit element, such as a flexible circuit board 180 and mechanically coupled to the connector carrier 176. The flexible circuit board 180 can be electrically connected to the controller module circuit board 92 (see also FIGS. 25 and 26).

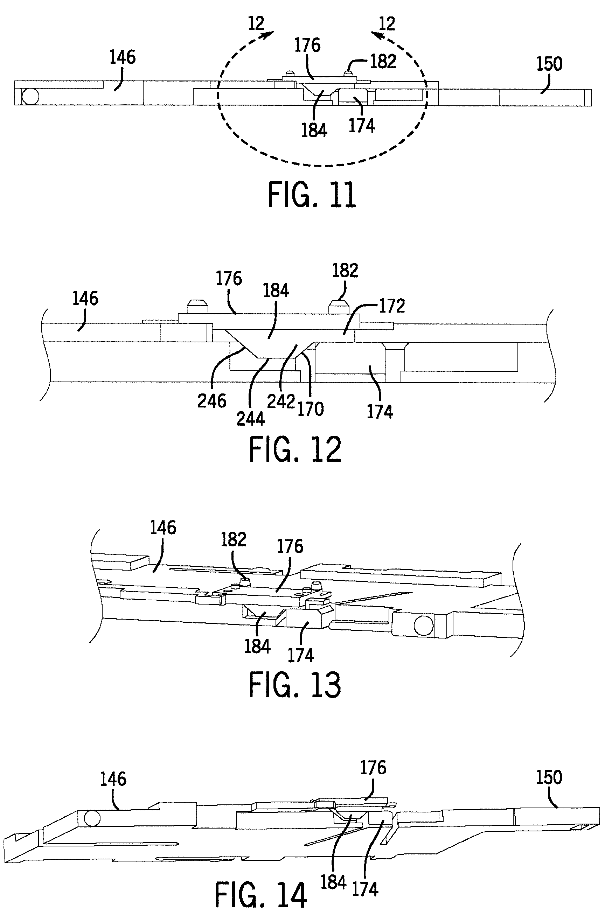

As shown in FIG. 1, coupling the communication module back side electrical connector 130 to the controller module front side electrical connector 132 can be a blind mate connection, in that, as the communication module 34 is being coupled to the controller module 32, the mating of the communication module back side electrical connector 130 to the controller module front side electrical connector 132 can be visually obstructed for the user. To insure connector alignment, the connector carrier 176 can include at least one alignment member 182 (see FIGS. 11 and 12) that can serve to provide X-Y positioning when coupling the communication module 34 to the controller module 32. It is to be appreciated that other alignment features can also be included.

Referring to FIG. 9, the connector carrier 176 can include a cam 184 on a bottom surface 186 of the connector carrier 176. The cam 184 in cooperation with the biasing member 174 can selectively apply a spring force 188 in the Z direction to the controller module front side electrical connector 132 when the front latch plate 146 is being transitioned from the unlatched position 158 to the latched position 156. Referring to FIG. 10, the cam 184 can also disengage from the biasing member 174 to provide mechanical isolation of the controller module front side electrical connector 132 from the controller module 32. When the communication module back side electrical connector 130 is coupled to the controller module front side electrical connector 132, the controller module front side electrical connector 132 can be mechanically coupled to the controller module only through the flexible circuit board 180, providing mechanical isolation between the controller module housing 76 and the controller module front side electrical connector 132.

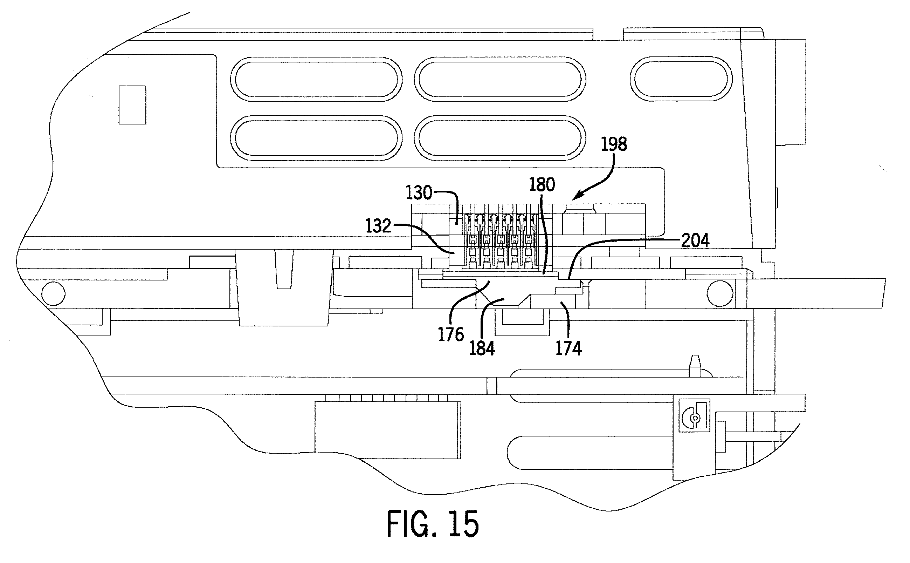

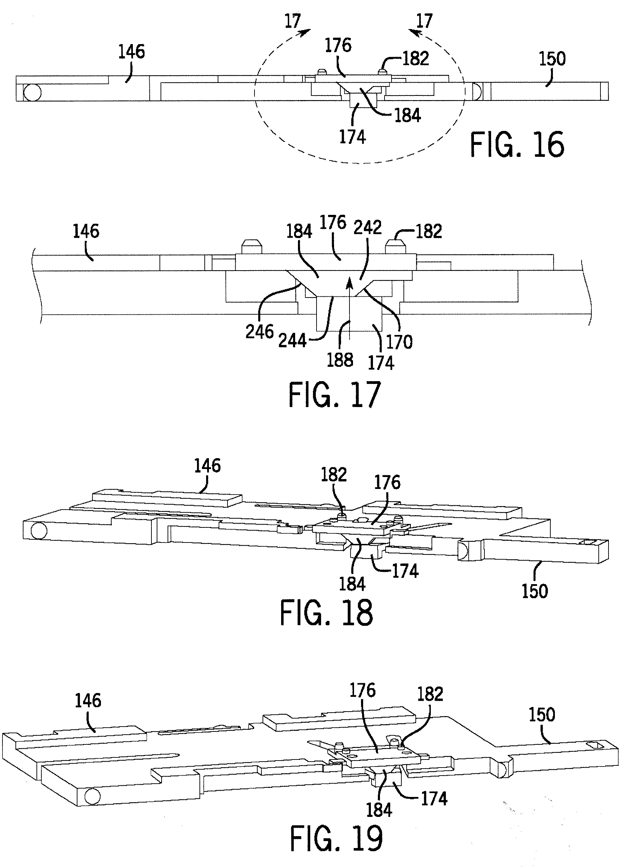

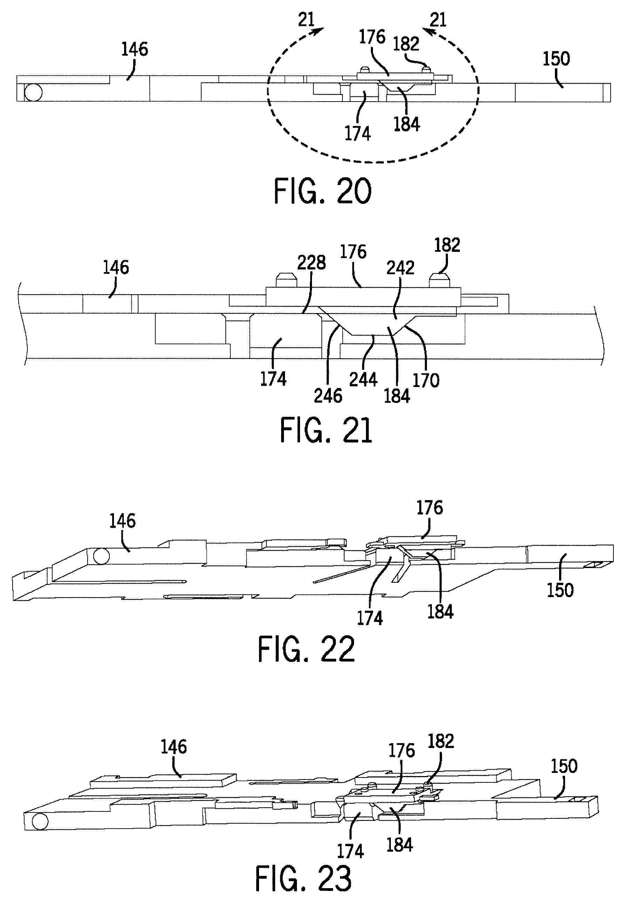

Referring to FIGS. 8-23, the cam 184 in cooperation with the biasing member 174 can provide a plurality of operational states. In some embodiments, operational states can include an unmated, unlatched position 190 (see FIGS. 8 and 11-14), a mated, unlatched position 198, where the modules are pressed together by the user (see FIG. 15), a mated, transitioning to latched position 200 (see FIGS. 9 and 16-19), and a mated, fully latched position 202 (see FIGS. 10 and 20-23). Each will be described in greater detail below.

Referring to FIGS. 8 and 11-14, in the unmated, unlatched position 190, a first section 242 of the cam 184 on the connector carrier 176 can include a first edge 170 and a detent 172 (see FIG. 12) that can maintain the biasing member 174 and front latch plate 146 in the unlatched position 190 and can provide a light force to deflect the biasing member 174 and hold the controller module front side electrical connector 132 in an over-travel Z-position. The detent 172 can cause the biasing member 174 to force the connector carrier 176 to contact the inside of the controller module housing 76. An initial force can be needed to begin mating the communication module back side electrical connector 130 to the controller module front side electrical connector 132. The detent 172 can provide only a light load on the biasing member 172 in shipped state, which helps to reduce or eliminate creepage and/or relaxation. This can be more of a factor when the biasing member 174 is plastic as compared to metal.

Referring to FIG. 15, in the mated, unlatched position 198, where the modules are pressed together by the user, a gap 204 can be created between the controller module housing 76 and the connector carrier 176 if the biasing member 174 does not overcome the mating force of the communication module back side electrical connector 130 to the controller module front side electrical connector 132. This mating force can slightly push the controller module front side electrical connector 132 into the interior 90 of the controller module housing, causing the gap 204.

Referring to FIGS. 9 and 16-19, the mated, transitioning to latched can be a momentary state between unlatched and latched that can provide a peak Z force 188 to fully mate the connectors. The transition state during latching allows high biasing member 174 force to fully mate the connectors without a risk of biasing member relaxation. In the mated, transitioning to latched position 200, the communication module back side electrical connector 130 has been mated to the controller module front side electrical connector 132. The front latch plate 146 can be slid from an unlatched position 158 to a latched position 156 (see FIGS. 6 and 7). The sliding of the latch plate 146 can cause the biasing member 174 to overcome the first edge 170 of the cam 184, and next interact with a second section 244 of the cam 184. The second section 244 of the cam 184 can cause the biasing member to further deflect to provide an increased Z force 188 on the connector carrier 176 to fully mate the communication module back side electrical connector 130 to the controller module front side electrical connector 132. When the connectors are fully mated, the gap 204 between the controller module housing 76 and the connector carrier 176 can be present.

Referring to FIGS. 10 and 20-23, in the mated, fully latched position 202, the communication module back side electrical connector 130 is fully mated to the controller module front side electrical connector 132. The front latch plate 146 has been slid from the unlatched position 158 to the latched position 156 (see FIGS. 6 and 7). The sliding of the latch plate 146 can cause the biasing member 174 to overcome the force of the second section 244 of the cam 184, and slide past a third section 246 of the cam 184. In the latched position 156, the biasing member 174 disengages generally completely from both the cam 184 and the connector carrier 176 and can cause the gap 204 to be present between the controller module housing 76 and the connector carrier 176, and a gap 228 between the biasing member 174 and the connector carrier 176.

In this latched position 156, the controller module front side electrical connector 132 and carrier 176 can be mechanically coupled to the communication module 34 by the connector mating forces more significantly than the controller module 30 because the controller module front side electrical connector 132 is mechanically coupled to the controller module 32 by the compliant flexible circuit board 18. The gaps 204 and 228 can provide the isolation and protection from connector contact wear due to module-to-module relative motion.

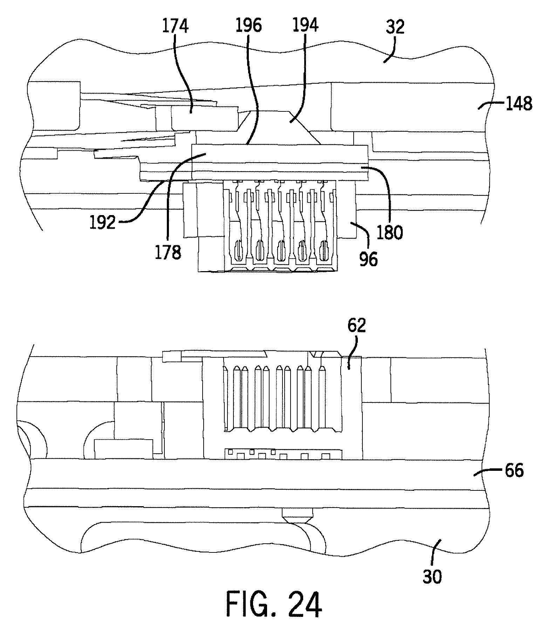

As with the communication module back side electrical connector 130 and the controller module front side electrical connector 132, referring to FIG. 24, in some embodiments, the sensing module front side electrical connector 62 can be rigidly and electrically connected to the sensing module circuit board 66. The controller module back side electrical connector 96 can be electrically connected to the flexible circuit board 180 and mechanically coupled to an additional connector carrier 178 for the controller module back side electrical connector 96.

As with coupling the communication module back side electrical connector 130 to the controller module front side electrical connector 132, coupling the controller module back side electrical connector 96 to the sensing module front side electrical connector 62 can also be a blind mate connection, in that, as the controller module 32 is being coupled to the sensing module 30, the mating of the controller module back side electrical connector 96 to the sensing module front side electrical connector 62 can be visually obstructed for the user. To insure connector alignment, the connector carrier 178 can include at least one alignment member 192 and/or other alignment features that can serve to provide X-Y positioning when coupling the controller module 32 to the sensing module 30.

The connector carrier 178 can be the same or similar to connector carrier 176, and can include a cam 194 on a top surface 196 of the connector carrier 178. The cam 194 in cooperation with the biasing member 174 can selectively apply a spring force 188 in the Z direction to the controller module back side electrical connector 96 when the back latch plate 148 is being transitioned from the unlatched position 158 to the latched position 156. The cam 194 can also disengage from the biasing member 174 to provide mechanical isolation of the controller module back side electrical connector 96 from the controller module 32. When the controller module back side electrical connector 96 is coupled to the sensing module front side electrical connector 162, the controller module back side electrical connector 96 can be mechanically coupled to the controller module 32 only through the flexible circuit board 180, providing mechanical isolation between the controller module housing 76 and the controller module back side electrical connector 96.

Cam 194 in cooperation with the biasing member 174 can provide the same or similar plurality of operational states as cam 184, and as shown and described in relation to FIGS. 8-23. Cam 194 in cooperation with the biasing member 174 can ensure complete contact engagement during assembly of one or more modules to another, thereby mechanically isolating the mated connector pair from module-to-module relative motion after the modules are latched together.

Referring to FIGS. 25 and 26, the connectors 96 and 132 affixed to the flexible circuit board 180 can carry, for example, power and signals to and from the controller module circuit board 92 to the controller module front side electrical connector 132 and controller module back side electrical connector 96. In other embodiments, the flexible circuit element 180 can comprise a rigid flex circuit board and/or flat flexible cables, as non-limiting examples. The use of a flexible circuit board 180 allows both connectors in the controller module 32 to first fully mate, and then allows both connectors 96, 132 in the controller module 32 to "float," meaning mechanical isolation with only the flexible circuit element 180 providing a connection to the connector. Connector engagement can provide one aspect of assembling the modular overload relay assembly 20, and module attachment using latching hooks 64 can provide another aspect of assembling the modular overload relay assembly 20.

As described above, the connectors 96, 132 on the flexible circuit board 180 within one of the modules will blind mate to the adjacent module during intuitive assembly of the modules. The mechanical latching system comprising the latch plate 144 and the latching hooks 64 that holds the modules together provides connector engagement force and overtravel to insure full mating prior to completion of the module latching operation and then the mechanical latching system disengages from the connector substantially completely so the only mechanical linkage of the mated connector pair to the main module is the flexible circuit element 180. The flexible circuit element, for example the flexible circuit board 180, communicates nearly zero force from module-to-module relative motion to the contact interface.

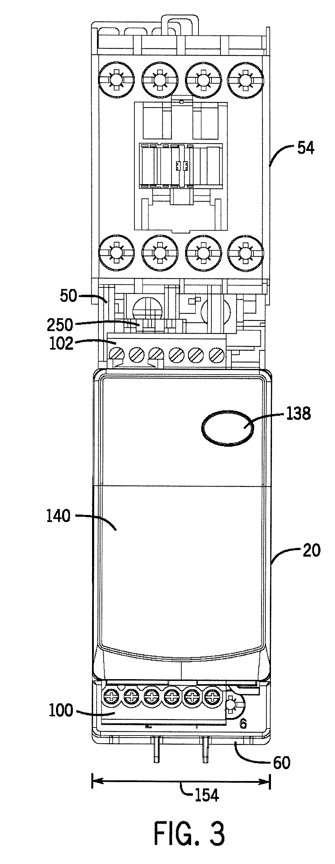

Referring to FIGS. 27-33, in some embodiments, the sensing module 30 can include voltage measurement and power calculation capabilities using a voltage sensor contact 206. The voltage sensor contact 206 can provide an electrical connection 212 with a phase conductor 214 carrying a load current at a load voltage. The electrical connection 212 can be made internal to the overload relay assembly 20, and without extra connection or effort on the part of the user. Providing the voltage measuring function internal to the sensing module 30 can eliminate the need for any additional external wiring, terminal blocks, or use of additional modules, allowing the overload relay to perform the voltage measurement and power calculation functions without increasing the width or the depth of the overload relay 20. As seen in FIGS. 2 and 3, the controller module 32 can be coupled to the front of the sensing module 30, and the communication module 34 can be coupled to the front of the controller module 32, all while maintaining a predetermined width 154 of the modular overload relay. The predetermined width can comprise known standard widths for contactors and overload relays including 45mm, 59mm, 72mm and 95mm, as non-limiting examples.

The voltage sensor contact 206 provides a low cost, low physical volume device and method to measure voltage and, therefore, calculate power. The overload relay assembly 20 can support the CIP energy object, and can support a user's desire to manage power, and/or employ smart grid methods, for example.

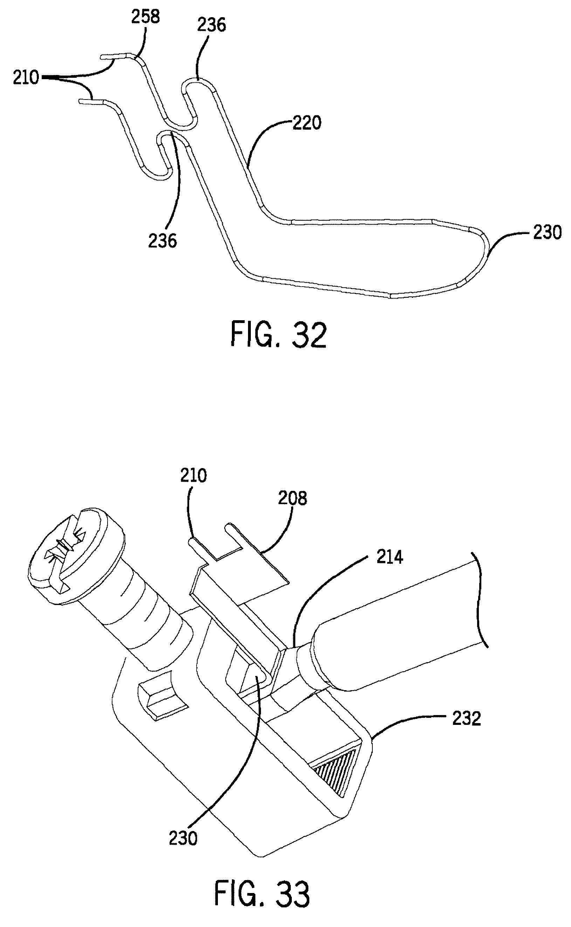

Referring to FIG. 27, in some embodiments, the voltage sensor contact 206 can comprise an electrical conductor 220 positioned generally internal to the sensing module 30. The electrical conductor 220 can include one or more ends 210 to couple to the sensing module circuit board 66, and two are shown, as seen in FIG. 32, Or alternatively, the electrical conductor 220 can be a formed or stamped part 208 (see FIG. 33). It is to be appreciated that the electrical conductor 220 can comprise any known electrically conductive material or materials including a single or multi-stranded wire, and/or conductive fibers, for example.

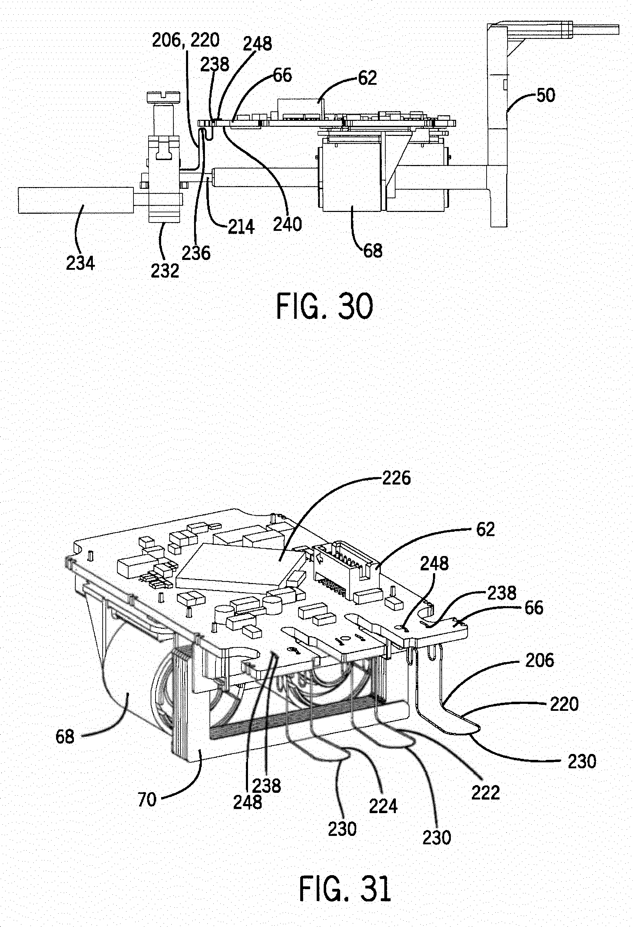

Referring to FIGS. 28-30, the electrical conductor 220 can be electrically coupled to both the sensing module circuit board 66 and the phase conductor 214 to provide a voltage to a processor 226 on the sensing module circuit board 66, or alternatively to the processor 94 on the controller module circuit board 92. It is to be appreciated that the sensed voltage can be conditioned prior to being provided to an A/D converter (not shown) and/or the processor 226 or 94. It is also to be appreciated that processor 94 and/or processor 226 can serve to implement the voltage measurement and power calculation capabilities, and to analyze sensed data to determine when a condition exists that may warrant opening of one or more overload relay contacts. In the three phase embodiment shown, three electrical conductors 220, 222, 224 are included (see FIG. 27), one for each phase, and each electrical conductor can be electrically coupled to an individual phase conductor 214, 216, 218 respectively (see FIGS. 27 and 31). Only a single electrical conductor is needed per phase to create the required electric connection 212.

The electrical conductor 220 can be electrically coupled to the sensing module circuit board 66 with one or more through-holes 238 using standard surface mount reflow processes (pin-in-paste) or wave-soldering processes. Most surface mount components sit on the surface of a circuit board, typically with no plated-through holes. The surface mount technology process is well known. The process can be extended to effectively solder through-hole parts by correct sizing of the plated through-hole with respect to the pin, the size of the pad around the hole, and the correct amount of paste stenciled onto and around the pad. Pin-in-paste joints typically "over-paste," where the paste area is larger than the pad around the hole to provide extra solder to make a joint in to the pin in the barrel. Molten solder will wet to the metal areas, such as pad, through-hole barrel, and component pin, and get pulled from the non-metal areas around the pad. Many things can go wrong with this process. For example, a connector with a plastic body feature that touches the circuit board surface too close to the pad will interfere with the paste and impede flow of solder into the joint or cause the extra solder to ball up instead of flow.

The method of coupling the electrical conductor 220 to the sensing module circuit board 66 solves a variety of possible mounting issues. A through-hole 238 for the electrical conductor 220 can provide an optimum solder joint strength. Use of a surface mount technology process can provide compatibility with other components on the sensing module circuit board 66, which helps to avoid added assembly costs. The electrical conductor 220 has a center of gravity located away from the through-hole 238, so it can be configured to utilize features that support it in the correct position before and during formation of the solder joint. In order to support the electrical conductor 220 during the mounting process, the electrical conductor 220 can include at least one U-bend 236 to be positioned on a side 240 of the sensing module circuit board 66 (see FIGS. 30 and 32) to provide support without additional fixturing, while maintaining an optimal wire-sticking-straight-out-of-hole 238 orientation so the solder collects in the barrel 248 with the electrical conductor 220. The electrical conductor can also include a generally ninety degree bend 258 near ends 210 to provide further support during formation of the solder joint.

During assembly of the sensing module 30, a contact portion 230 of the electrical conductor 220 can be positioned within one of the load side terminals 60, such as a box lug 232 of the sensing module 30, eliminating the need for any final assembly operation or components. The compliant electrical conductor 220 also can provide a robust final assembly fit and allowance for tolerance stackup within the interior 46 of the sensing module. A user's action of tightening the box lug 232 to a load wire 234 (see FIGS. 28 and 30) can create a low resistance and reliable electrical connection between the electrical conductor 220 and the phase conductor 214. The consistency of the electrical connection can help to maintain a consistent accuracy of the voltage measurement.

The electrical conductor 220 design and material selection can provide inherent resilience. The electrical conductors 220, 222, 224 can help to isolate contactor 54 shock and vibration experienced by the phase conductors 214, 216, 218 from electrical conductor solder joints 238, the sensing module circuit board 66, and electrical components (e.g., processor 226).

The electrical conductor 220 can provide the electrical connection 212 function and required voltage creepage and clearance requirements while at the same time requiring little or no additional sensing module 30 volume or sensing module circuit board 66 space.

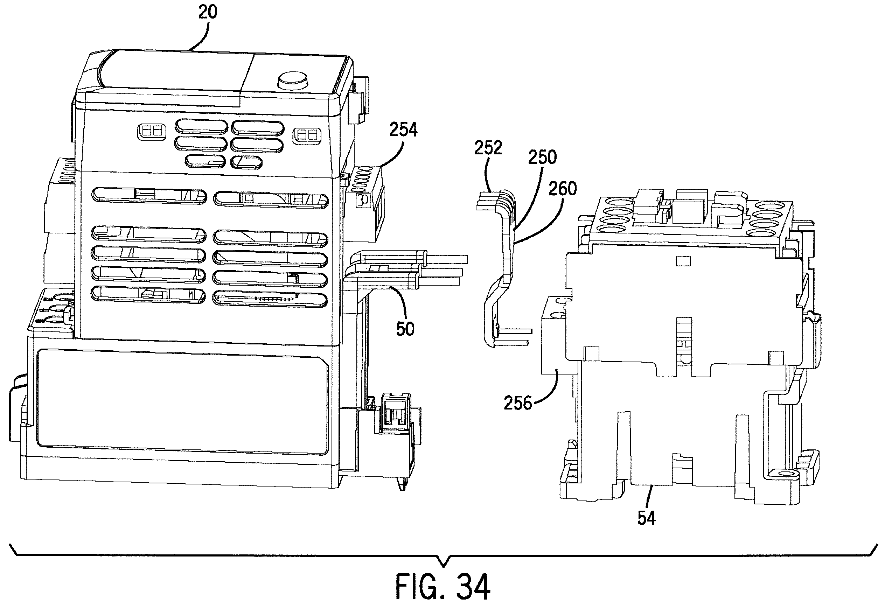

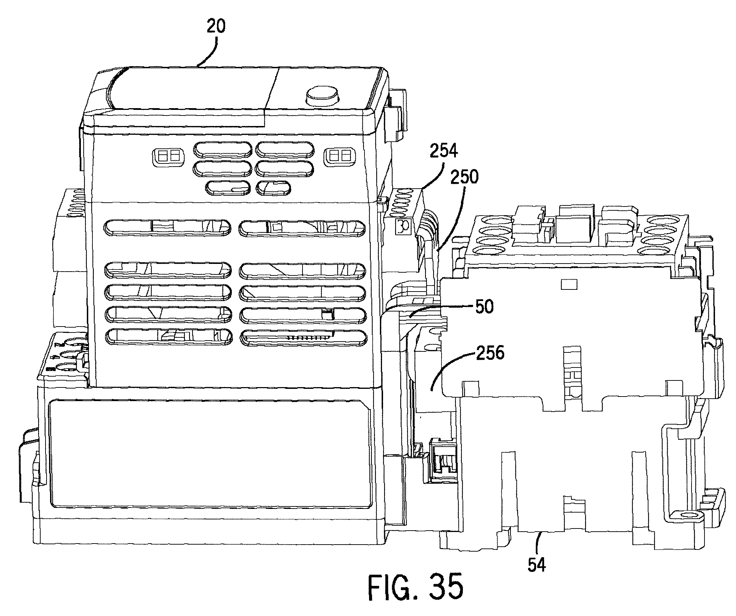

Referring to FIGS. 34-38, in some embodiments, the overload relay assembly 20 can include a preformed coil interface 250 including jumper wiring 252. The preformed coil interface 250 can reduce a user's wiring time and labor to connect predetermined output terminals 254 of the overload relay assembly 20 to predetermined contactor coil terminals 256 on the contactor 54.

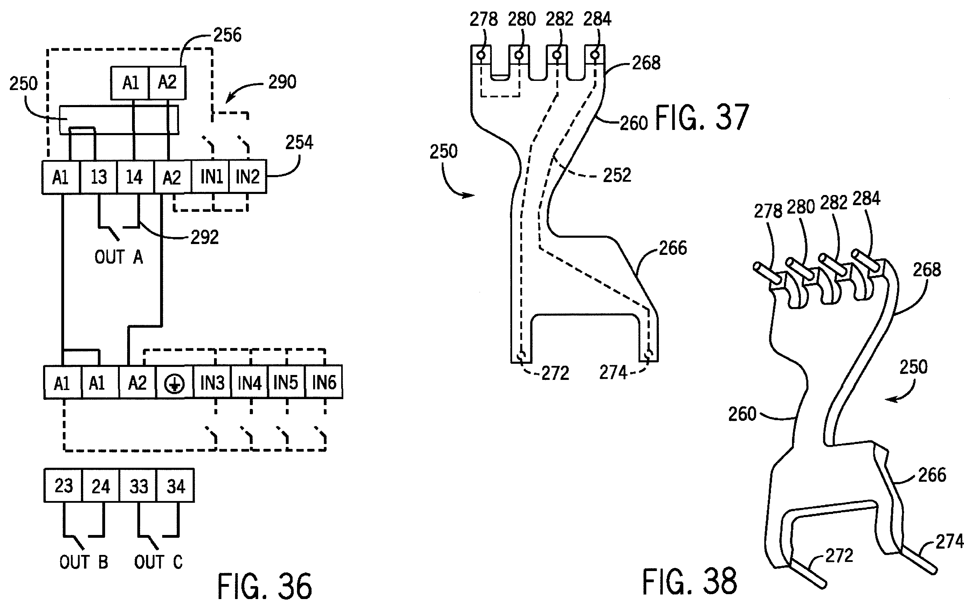

The preformed coil interface 250 can eliminate cutting and stripping wires for electrically connecting the output terminals 254 of the overload relay assembly 20 to the contactor coil terminals 256 on the contactor 54 to complete a control circuit 290 (see FIG. 36). In addition, the preformed coil interface 250 can be preformed in a plurality of configurations to automatically and correctly electrically connect the output terminals 254 of the overload relay assembly 20 to the contactor coil terminals 256, thereby eliminating the possibility of incorrect control wiring.

Jumper wiring 252 of the preformed coil interface 250 can be aligned by a molded insulator 260, and when secured to either of the output terminals 254 of the overload relay assembly 20 or the contactor coil terminals 256, the preformed coil interface 250 can automatically align with and facilitates the correct connection to the other of the output terminals 254 of the overload relay assembly 20 or the contactor coil terminals 256.

Referring to FIGS. 37 and 38, in some embodiments, the preformed coil interface 250 can include a contactor coil terminal end 266 and an overload relay output terminal end 268. The contactor coil terminal end 266 can include two jumper wiring connection points 272 and 274, although one and more than two are contemplated. The overload relay output terminal end 268 can include four jumper wiring connection points 278, 280, 282, and 284, although less than and more than four are contemplated. As can be seen, connection point 272 can extend through the preformed coil interface 250 to connection point 282 at the overload relay output terminal end 268. Similarly, connection point 274 can extend through the preformed coil interface 250 to connection point 284 at the overload relay output terminal end 268. Connection points 278 and 280 can be jumpered internal to the preformed coil interface 250.

Jumper wiring connection points 272 and 274 can extend outward substantially at a 90 degree angle from the contactor coil terminal end 266, and the four jumper wiring connection points 278, 280, 282, and 284 can extend outward substantially at a 90 degree angle from the overload relay output terminal end 268 and in a substantially opposite direction to the jumper wiring connection points 272 and 274.

In this configuration, the preformed coil interface 250 serves to complete the control circuit 290 where control power, indicated as A1 and A2 in FIG. 36, can be wired in series through an overload relay contact 292 and to the contactor coil terminals 256. In operation, when the modular overload relay assembly 20 trips due to a sensed condition, contact 292 opens and removes control power from the contactor coil terminals 256, thereby interrupting power to a motor, in a manner well understood to those skilled in the art.

It is to be appreciated that the preformed coil interface 250 can include other wiring configurations capable of providing other control circuit functionality and able to operate with additional contacts (not shown) on either or both the overload relay assembly 20 and the contactor 54. The contact 292 may be realized with solid-state elements such as transistors and need not be any particular form of contact, as is understood in the art.

Referring to FIG. 5, in some embodiments, a communication module 34 can display status information of a control module 32, the communication module, and the overload relay through a local human interface 140 with a plurality of indicating lights 142 positioned on the communication module. In one embodiment, the indicating lights 142 can be light emitting diodes (LEDs). The status of the overload relay assembly 20 can be presented to a user though a plurality of indicating light 142 colors. In another embodiment, the status of the overload relay assembly 20 can be presented to a user by switching the indicating light 142 on and off in one of a plurality of patterns that can correspond to one of a plurality of specific status messages. In an exemplary embodiment, the status information can be communicated through a combination of a plurality of indicating light 142 colors and a plurality of on-off patterns. The indicating lights 142 can provide a plurality of status information messages, such as power and network status, warning messages, trip condition or fault status of the control module. It is to be understood that the plurality of status messages are not intended to be limited to those stated.

The local human interface 140 on the control module 34 can communicate a status to the user by switching a plurality of indicator lights 142 on and off in a plurality of pre-determined patterns corresponding to a status message. The plurality of messages communicated by the local human interface 140 can be prioritized to ensure that the local human interface 140 communicates the most critical messages before any less critical status messages. For example, when a low priority message, such as a warning message, is being communicated by the local human interface 140, and a new warning message is received by the communication module 34, the prior warning message can be communicated by the local human interface 140 first, before the second warning message can be communicated by the local human interface 140. However, if a low priority message, such as a warning message is being communicated by the local human interface 140, and a high priority message such as a fault message is received by the communication module 34, the warning message being communicated by the local human interface 140 can be stopped and the fault message can be communicated by the local human interface 140 to the user, allowing the fault message to interrupt the communication of a lower priority warning message.

In other embodiments, the indicating lights 142 can be a plurality of colors. Individual colors can correspond to specific types of communication messages, such as green for a power or network status message, yellow for a warning status message, and red for a fault status message. In some embodiments, a plurality of different color indicating lights 142 can be utilized. In other embodiments, the individual indicating lights 142 can illuminate in a plurality of colors, thus reducing the quantity of individual indicating lights 142 required for message communication.

In one embodiment, the control module 32 can communicate status information to the communication module 34 to be displayed on the local human interface 140. In an exemplary embodiment, a two-wire, multi-master interface, such as I²C, can transmit and receive data between the control module 32 and the communication module 34. In this exemplary embodiment, there can be two masters, the communication module 34 and the control module 32. The control module 32 will transmit data to be displayed by the local human interface 140 to the communication 34 module in an I2C format. The communication module 34 can have a fixed slave address. The fixed slave address of the communication module can be dependent on the type of communication module 34 (DeviceNet, Ethernet/IP, etc). The communication module 34 can receive a specific frame of data from the control module 32 that contains a plurality of information. The plurality of information transmitted by the control module 32 can be displayed by the local human interface 140 on the communication module 34.

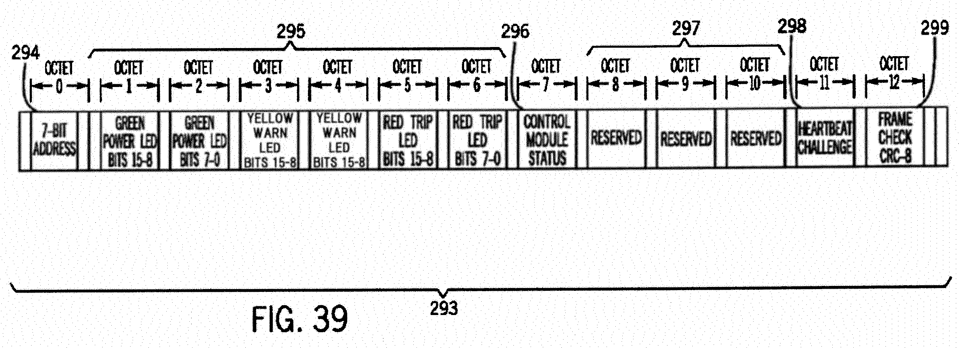

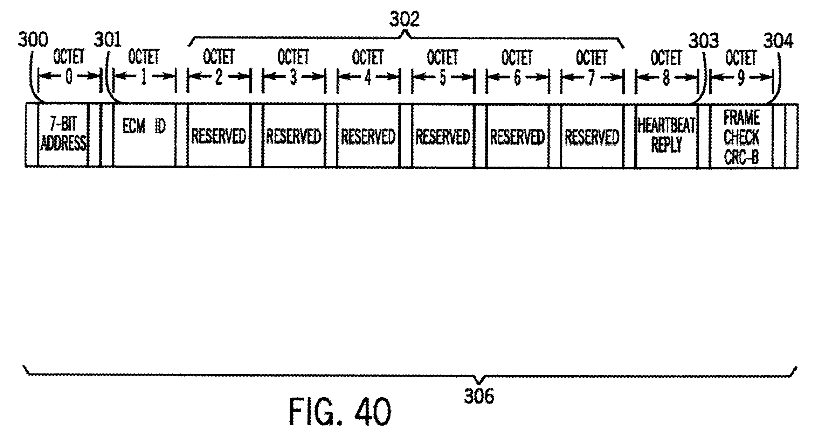

FIGS. 39 and 40 are exemplary embodiments of an I²C frame format for I/O communication. FIG. 39 shows an exemplary embodiment of a control module 32 to communication module 34 serial data frame 293, comprised of thirteen individual octets, each octet having eight bits. Octet zero 294 establishes the address of a communication module 34 used in a modular overload relay 20. In this exemplary embodiment, the address of the communication module 34 can be determined based on the type of communication module 34. For example, Ethernet/IP, DeviceNet, and Profibus can be possible communication module 34 types. Octets one through six 295 can transmit data for the indicating lights 142 on the local human interface 140. Octet seven 296 can transmit status data of the control module 32. Octets eight through ten 297 can be reserved. Octet eleven 298 can transmit data for a heartbeat challenge which is discussed in more detail below. Finally, octet twelve 299 can transmit data for a frame check character, also discussed in more detail below.

FIG. 40 shows an exemplary embodiment of a communication module 34 to control module 32 serial data frame 306 comprised of nine octets, with each octet having eight bits. Octet zero 300 can transmit the address of the control module 32. Octet one 301 can transmit data to establish an address of a communication module 34. In this exemplary embodiment, the address of the communication module can be determined based on the type of communication module. For example, Ethernet/IP, DeviceNet and Profibus can be possible communication module types. Octets two through seven 302 can be reserved. In one embodiment, reserved octets two through seven 302 can be used to add functionality such as unit or vendor identification. In other embodiments, reserved octets two through seven 302 can also include data for entering an administrative mode. However, it should be known that these reserved octets can be used to provide other functionality not listed here. Octet eight 303 can transmit data for a heartbeat challenge response, which is discussed in more detail below. Finally, Octet nine 304 can transmit data for a frame check character, also discussed in more detail below. The above serial data frame embodiments are used as exemplary examples. It is to be appreciated that the data in the specific frames as well as the structure of the serial data frames can be structured differently to transmit the data, as is understood in the art.

In an exemplary embodiment, the serial data frame can contain a frame check character 299, 304. The frame check character 299, 304 can be an eight bit, Cyclical Redundancy Check (CRC-8). The frame check character 299, 304 can validate the data sent by a master module and received by a slave module. In an exemplary embodiment, when the control module 32 is transmitting, it can be a master module, and when the communication module 34 is receiving, it can be a slave module. Conversely, when the communication module 34 is transmitting, it can be a master module and when the control module 32 is receiving, it can be a slave module. A control module 32 can transmit a frame check character 299, 304 to a communication module 34. The communication module 34 can apply a standard calculation to the frame check character 299, 304 to validate the data received from the control module 32. The serial data frame 293, 306 validated, the communication module 34 can then send a reply to the control module 32 for each received frame. The frame check character 299, 304 can also determine that a serial data frame 293, 304 was received incorrectly, or that an incorrect amount of data was received by the communication module 34, making the frame invalid. The communication module 34, having received an invalid serial data frame 293, 304, may not send a reply serial data frame 293, 304 to a control module 32. The process is the same where the communication module 34 is transmitting data to the control module 32.

In another embodiment, a control module 32 can monitor for a valid serial data frame 293, 304 response from the communication module 34. The control module 32 can execute a pre-determined amount of attempts to communicate with the communication module 34 after the expiration of a pre-determined amount of time (for example, 300ms) if a valid frame response is not transmitted by the communication module 34. After a pre-determined number of failed attempts (for example, three), the control module 32 can search for a connected communication module 34 by incrementing the value of the address octet contained in the serial data frame. The control module can continue to search for a connected communication module 34 until the expiration of a pre-determined time period. Upon expiration of the pre-determined time period, the communication module 34 can set an internal communication fault condition and can indicate the fault to the user on the local human interface 140. The internal communication fault condition can stop all I/O communications between the communication module 34 and the control module 32 and the communication module 34 and an external customer network.

In another embodiment a non-I/O network communication between the control module 32 and the communication module 34, such as a CAN based network protocol, can remain in a normal operational state when an internal communication fault condition is present. Non-I/O network communication between the communication module 34 and an external network can also remain in a normal operation state to allow explicit communication between the user and the communication module 34. The user can use a non-I/O external network communication to query the status of the overload relay assembly 20. In one embodiment, an embedded web server in the communication module 34 can also be accessed with the overload relay assembly 20 in an internal communication fault condition, providing the user the ability to troubleshoot the overload relay assembly 20 remotely.

In some embodiments, the serial data frame 293, 304 communicated between the control module 32 and communication module 34 can contain a heartbeat challenge 298, 303, to provide a notification mechanism to a user that there is a hardware issue in the overload relay assembly 20, and allow the control module 32 to place the overload relay assembly 20 in a safe condition. The heartbeat challenge 298, 303 can also detect a firmware error, such as a background process being caught in an indefinite loop.

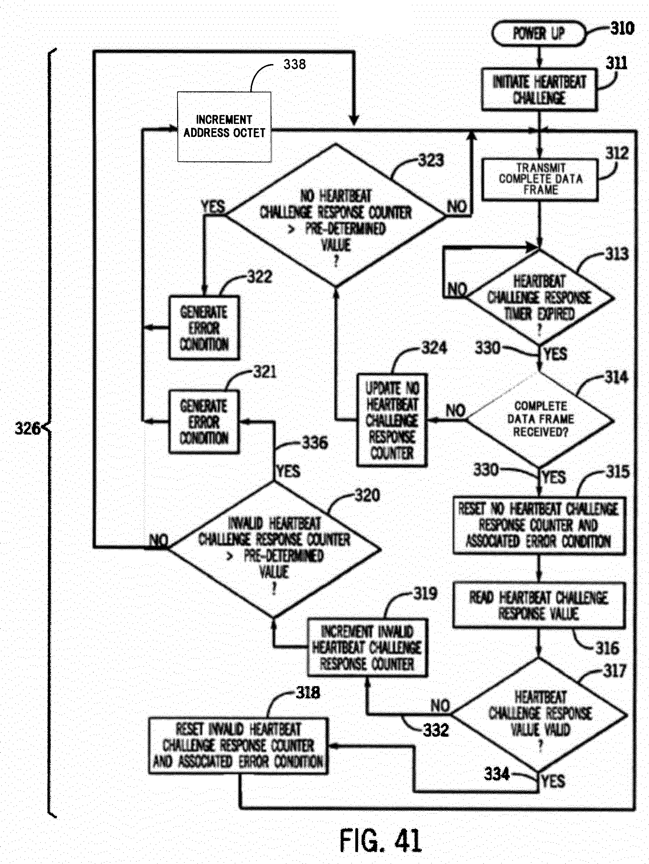

In reference to FIG. 41, the control module 32 can initiate the heartbeat challenge 311 after power-up 310 in a background loop 326. The background loop 326 in the control module 32 can transmit a complete data frame containing a heartbeat challenge value 312 to the communication module 34. The control module 32 can monitor for a complete data frame containing a heartbeat response 314. The control module can further update a no heartbeat response software counter 324 every time a heartbeat challenge is transmitted 312 and no heartbeat challenge is received 314 from the communication module 34 after a predetermined time 313. The control module 32 not receiving a complete data frame containing a heartbeat response 314 in a pre-determined amount of time 323 from the communication module 34 can generate an error condition 322 and execute a pre-determined process to place the overload relay assembly 20 in a safe state and/or remove power from the load. After generating an error condition 322, the control module 32 can increment the address octet 338 of serial data frame 293 to determine the type of communication module 34 present in the system. The complete data frame containing a heartbeat challenge value can be transmitted 312 again. The control module 32 can increment the address octet 338 through all of the possible communication module 34 addresses. In one embodiment, the control module 32 can repeatedly cycle through all available communication module 34 addresses until a complete frame response challenge is received 314. The control module 32, receiving a complete data frame containing a heartbeat response challenge 330, can reset 315 the no heartbeat response counter 324 and the error condition 322.

The control module 32, can read a received heartbeat challenge 316 and verify the heartbeat response is valid 317. The control module 32, receiving an invalid heartbeat challenge response value 332, can transmit a new heartbeat challenge 312 to the communication module and update an invalid heartbeat response counter 319. The control module 32, can determine if the number of invalid heartbeat responses received exceeds a pre-determined value of incorrect response 320. The control module 32, receiving the pre-determined amount of incorrect responses 336 can generate an error condition 321 and execute a pre-determined process to place the system in a safe state and/or remove power from the load. The control module 32, receiving a valid heartbeat response 334, can reset 318 the invalid heartbeat response counter 319 and the error condition 321.

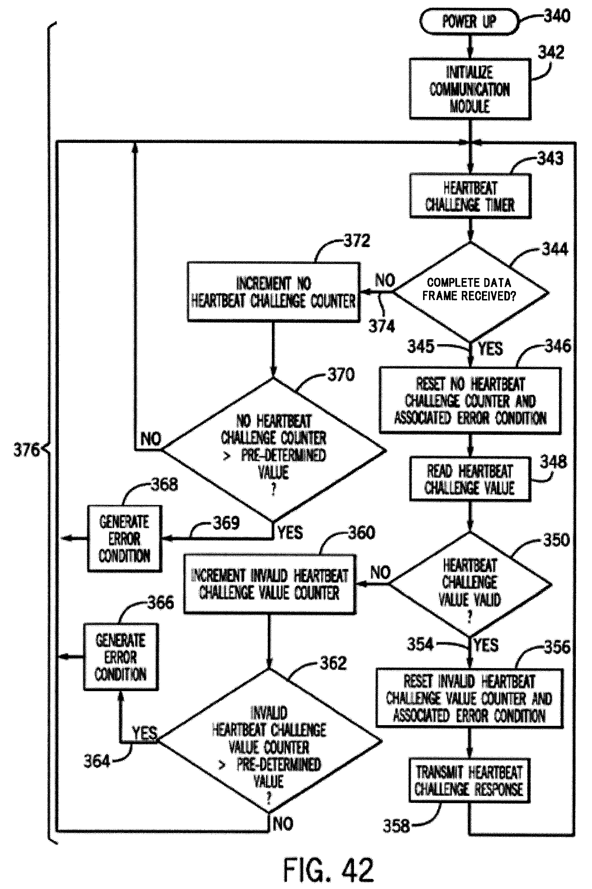

In reference to FIG. 42, when a communication module 34 is energized 340 and initialized 342, it can monitor for a complete data frame containing a heartbeat message 344 from a control module 32 in a background loop 376. The communication module 34 can increment a counter 372 when no heartbeat message is received 374 from the control module 32, after the expiration of a timer 343. The communication module 34, can compare the counter 372 against a pre-determined limit value 370. The communication module 34, not receiving a heartbeat message in a pre-determined limit value 369, can generate an error condition 368 and execute a pre-determined process to place the overload relay assembly 20 in a safe state and/or remove power from the load. The communication module 34, receiving a heartbeat message 345 from a control module 32, can reset 348 the counter 372 and the error condition 368.

The communication module 34 can read a received heartbeat message 348 and determine if the received heartbeat message is valid 350. The communication module 34, receiving an invalid heartbeat message 352 from the control module 32, can increment a counter 360. The communication module 34 can compare the counter 360 value against a predetermined value 362. The communication module 34 receiving a quantity of incorrect heartbeat messages 352 that exceeds the pre-determined value 364 can generate an error condition 366. The communication module 34, receiving a valid heartbeat message 354 from a control module 32 can reset 356 the counter 360 and/or the error condition 366, and can further initiate a heartbeat response message 358 that can be sent to the control module 32.

While the invention may be susceptible to various modifications and alternative forms, specific embodiments have been shown by way of example in the drawings and have been described in detail herein. However, it should be understood that the invention is not intended to be limited to the particular forms disclosed. Rather, the invention is defined by the following appended claims. including

This written description uses examples to disclose the invention, including the best mode, and also to enable any person skilled in the art to practice the invention, including making and using any devices or systems and performing any incorporated methods. The patentable scope of the invention is defined by the claims and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Finally, it is expressly contemplated that any of the processes or steps described herein may be combined, eliminated, or reordered. Accordingly, this description is meant to be taken only by way of example, and not to otherwise limit the scope of this invention.

## Claims

1. A method for communicating between a first modular electronic device and a second modular electronic device, wherein the first modular electronic device and the second modular electronic device are part of a modular electronic overload relay, the method comprising:
transmitting (312) a first serial data frame from the first modular electronic device to the second modular electronic device; the first serial data frame including at least a status information, a heartbeat challenge value, and a frame check character;
receiving (344) the first serial data frame by the second modular electronic device;
detecting and validating (348) the heartbeat challenge value in the first serial data frame by the second modular electronic device;
transmitting (358) a second serial data frame from the second modular electronic device to the first modular electronic device; the second serial data frame including at least a heartbeat challenge response, and a frame check character response;
receiving the second serial data frame by the first modular electronic device;
detecting and validating (317) the heartbeat challenge response in the second serial data frame by the first modular electronic device; and
placing the modular overload relay in a safe state when the first modular electronic device does not receive the heartbeat challenge response or a valid heartbeat challenge response from the second modular electronic device.

2. The method of Claim 1,
further including displaying at least a portion of the status information on a local human interface on the second modular electronic device.

3. The method of Claim 1 or 2,
wherein the first modular electronic device is mechanically coupled to the second modular electronic device.

4. The method of one of Claims 1 to 3,
further including generating (321, 322) a fault condition by the first modular electronic device when the first modular electronic device does not receive at least one of the heartbeat challenge response and a valid heartbeat challenge response from the second modular electronic device; and/or
further including generating (366, 368) a fault condition by the second modular electronic device when the second modular electronic device does not receive at least one of the heartbeat challenge value and a valid heartbeat challenge value from the first modular electronic device.

5. The method of one of Claims 1 to 4,
wherein the first serial data frame and the second serial data frame are communicated using a two-wire communication protocol, and wherein the two-wire communication protocol is an I2C protocol.

6. The method of one of Claims 1 to 5,
wherein the status information transmitted by the first modular electronic device contains status information about the first modular electronic device and a third modular electronic device.

7. A modular electronic overload system comprising:
a first modular electronic device (32) and a second modular electronic device (34);
the first modular electronic device operable to transmit a first serial data frame (293) to the second modular electronic device, the first serial data frame including at least a status information (296), a heartbeat challenge value (298) and a frame check character (299);
the second modular electronic device operable to receive the first serial data frame from the first modular electronic device;
the second modular electronic device operable to validate the heartbeat challenge value;
the second modular electronic device operable to transmit a second serial data frame (306) to the first modular electronic device, the second serial data frame including a heartbeat challenge response (303) and a frame check character response (304);
at least one of the first modular electronic device and the second modular electronic device operable to generate a fault condition indicating a communication error between the first modular electronic device and the second modular electronic device; and
the first modular electronic device operable to place the modular electronic overload relay system (20) in a safe state when no heartbeat challenge response is received by the first modular electronic device, indicating a loss of serial communication between the first modular electronic device and the second modular electronic device.

8. The system of Claim 7,
wherein the second modular electronic device includes a local human interface (140), the local human interface having a plurality of indicating lights (142) operable to display at least a portion of the status information, and wherein the local human interface presents the at least a portion of the status information to a user by at least one of switching the indicating lights in a plurality of patterns and illuminating the indicating lights in a plurality of colors.

9. The system of Claim 7,
wherein the first modular electronic device is a control module and the second modular electronic device is a communication module.

10. The system of one of Claims 7 to 9,
wherein the serial data frame is communicated using a two-wire communication protocol, and wherein the two-wire communication protocol is an I2C protocol.

11. The system of one of Claims 7 to 10,
wherein:
the status information transmitted by the first modular electronic device contains status information about the first modular electronic device and a third modular electronic device (30); and/or
when the first modular electronic device receives an invalid heartbeat challenge response, the first modular electronic device generates a communication fault; and/or
when the second modular electronic device receives an invalid heartbeat challenge value, the second modular electronic device generates a communication fault.

12. The system of one of Claims 7 to 11,
wherein the first modular electronic device is operable to place the modular electronic overload system in a safe state when a predetermined number of invalid heartbeat response values are received by the first modular electronic device, indicating a loss of serial communication between the first modular electronic device and the second modular electronic device.

13. The system of Claim 8,
wherein the at least a portion of the status information displayed on the local human interface is prioritized based on a type of status information.

14. The system of one of Claims 8 to 13, wherein
the first modular electronic device is mechanically coupled to the second modular electronic device.

## Patentansprüche

1. Verfahren zum Kommunizieren zwischen einer ersten modularen elektronischen Einrichtung und einer zweiten modularen elektronischen Einrichtung, wobei die erste modulare elektronische Einrichtung und die zweite modulare elektronische Einrichtung Teil eines modularen elektronischen Überlastrelais sind, wobei das Verfahren umfasst:
Senden (312) eines ersten Serielle-Daten-Rahmens von der ersten modularen elektronischen Einrichtung an die zweite modulare elektronische Einrichtung, wobei der erste Serielle-Daten-Rahmen wenigstens Statusinformationen, einen Heartbeat-Challenge-Wert und ein Rahmenprüfzeichen enthält,
Empfangen (344) des ersten Serielle-Daten-Rahmens durch die zweite modulare elektronische Einrichtung,
Erfassen und Validieren (348) des Heartbeat-Challenge-Werts in dem ersten Serielle-Daten-Rahmen durch die zweite modulare elektronische Einrichtung,
Senden (358) eines zweiten Serielle-Daten-Rahmens von der zweiten modularen elektronischen Einrichtung an die erste modulare elektronische Einrichtung, wobei der zweite Serielle-Daten-Rahmen wenigstens eine Heartbeat-Challenge-Antwort und eine Rahmenprüfzeichen-Antwort enthält,
Empfangen des zweiten Serielle-Daten-Rahmens durch die erste modulare elektronische Einrichtung,
Erfassen und Validieren (317) der Heartbeat-Challenge-Antwort in dem zweiten Serielle-Daten-Rahmen durch die erste modulare elektronische Einrichtung, und
Versetzen des modularen Überlastrelais in einem sicheren Zustand, wenn die erste modulare elektronische Einrichtung keine Heartbeat-Challenge-Antwort oder keine gültige Heartbeat-Challenge-Antwort von der zweiten modularen elektronischen Einrichtung empfängt.

2. Verfahren nach Anspruch 1,
das weiterhin das Anzeigen wenigstens eines Teils der Statusinformationen an einer lokalen Mensch-Schnittstelle an der zweiten modularen elektronischen Einrichtung umfasst.

3. Verfahren nach Anspruch 1 oder 2,
wobei die erste modulare elektronische Einrichtung mechanisch mit der zweiten modularen elektronischen Einrichtung gekoppelt ist.

4. Verfahren nach einem der Ansprüche 1 bis 3,
das weiterhin das Erzeugen (321, 322) einer Fehlerbedingung durch die erste modulare elektronische Einrichtung, wenn die erste modulare elektronische Einrichtung keine Heartbeat-Challenge-Antwort und/oder keine gültige Heartbeat-Challenge-Antwort von der zweiten modularen elektronischen Einrichtung empfängt, umfasst, und/oder
das weiterhin das Erzeugen (366, 368) einer Fehlerbedingung durch die zweite modulare elektronische Einrichtung, wenn die zweite modulare elektronische Einrichtung keinen Heartbeat-Challenge-Wert und/oder keinen gültigen Heartbeat-Challenge-Wert von der ersten modularen elektronischen Einrichtung empfängt, umfasst.

5. Verfahren nach einem der Ansprüche 1 bis 4,
wobei der erste Serielle-Daten-Rahmen und der zweite Serielle-Daten-Rahmen unter Verwendung eines Two-Wire-Kommunikationsprotokolls kommuniziert werden und wobei das Two-Wire-Kommunikationsprotokoll ein I²C-Protokoll ist.

6. Verfahren nach einem der Ansprüche 1 bis 5,
wobei die durch die erste modulare elektronische Einrichtung gesendeten Statusinformationen Statusinformationen über die erste modulare elektronische Einrichtung und eine dritte modulare elektronische Einrichtung enthalten.

7. Modulares elektronisches Überlastsystem, das umfasst:
eine erste modulare elektronische Einrichtung (32) und eine zweite modulare elektronische Einrichtung (34),
wobei die erste modulare elektronische Einrichtung betrieben werden kann, um einen ersten Serielle-Daten-Rahmen (293) an die zweite modulare elektronische Einrichtung zu senden, wobei der erste Serielle-Daten-Rahmen wenigstens Statusinformationen (296), einen Heartbeat-Challenge-Wert (298) und ein Rahmenprüfzeichen enthält,
wobei die zweite modulare elektronische Einrichtung betrieben werden kann, um den ersten Serielle-Daten-Rahmen von der ersten modularen elektronischen Einrichtung zu empfangen,
wobei die zweite modulare elektronische Einrichtung betrieben werden kann, um den Heartbeat-Challenge-Wert zu validieren,
wobei die zweite modulare elektronische Einrichtung betrieben werden kann, um einen zweiten Serielle-Daten-Rahmen (306) an die erste modulare elektronische Einrichtung zu senden, wobei der zweite Serielle-Daten-Rahmen eine Heartbeat-Challenge-Antwort (303) und eine Rahmenprüfzeichen-Antwort (304) enthält,
wobei die erste modulare elektronische Einrichtung und/oder die zweite modulare elektronische Einrichtung betrieben werden können, um eine Fehlerbedingung zu erzeugen, die einen Kommunikationsfehler zwischen der ersten modularen elektronischen Einrichtung und der zweiten modularen elektronischen Einrichtung angibt, und
wobei die erste modulare elektronische Einrichtung betrieben werden kann, um das modulare elektronische Überlastrelaissystem (20) in einen sicheren Zustand zu versetzen, wenn keine Heartbeat-Challenge-Antwort durch die erste modulare elektronische Einrichtung empfangen wird, um einen Verlust der seriellen Kommunikation zwischen der ersten modularen elektronischen Einrichtung und der zweiten modularen elektronischen Einrichtung anzugeben.

8. System nach Anspruch 7, wobei die zweite modulare elektronische Einrichtung eine lokale Mensch-Schnittstelle (140) enthält, wobei die lokale Mensch-Schnittstelle eine Vielzahl von Anzeigeleuchten (142) aufweist, die betrieben werden können, um wenigstens einen Teil der Statusinformationen anzuzeigen, und wobei die lokale Mensch-Schnittstelle den wenigstens einen Teil der Statusinformationen für einen Benutzer anzeigt, indem sie die Anzeigeleuchten in einer Vielzahl von Mustern schaltet und/oder die Anzeigeleuchten in einer Vielzahl von Farben leuchten lässt.

9. System nach Anspruch 7,
wobei die erste modulare elektronische Einrichtung ein Steuermodul ist und die zweite modulare elektronische Einrichtung ein Kommunikationsmodul ist.

10. System nach einem der Ansprüche 7 bis 9,
wobei der Serielle-Daten-Rahmen unter Verwendung eines Two-Wire-Kommunikationsprotokolls kommuniziert wird und wobei das Two-Wire-Kommunikationsprotokoll ein I²C-Protokoll ist.

11. System nach einem der Ansprüche 7 bis 10,
wobei:
die durch die erste modulare elektronische Einrichtung gesendeten Statusinformationen Statusinformationen über die erste modulare elektronische Einrichtung und eine dritte modulare elektronische Einrichtung (30) enthalten, und/oder
wenn die erste modulare elektronische Einrichtung eine ungültige Heartbeat-Challenge-Antwort empfängt, die erste modulare elektronische Einrichtung einen Kommunikationsfehler erzeugt, und/oder
wenn die zweite modulare elektronische Einrichtung einen ungültigen Heartbeat-Challenge-Wert empfängt, die zweite modulare elektronische Einrichtung einen Kommunikationsfehler erzeugt.

12. System nach einem der Ansprüche 7 bis 11,
wobei die erste modulare elektronische Einrichtung betrieben werden kann, um das modulare elektronische Überlastsystem in einen sicheren Zustand zu versetzen, wenn eine vorbestimmte Anzahl von ungültigen Heartbeat-Antwortwerten durch die erste modulare elektronische Einrichtung empfangen werden, um einen Verlust der seriellen Kommunikation zwischen der ersten modularen elektronischen Einrichtung und der zweiten modularen elektronischen Einrichtung anzugeben.

13. System nach Anspruch 8,
wobei der an der lokalen Mensch-Schnittstelle angezeigte wenigstens eine Teil der Statusinformationen basierend auf dem Typ von Statusinformationen priorisiert wird.

14. System nach einem der Ansprüche 8 bis 13, wobei:
die erste modulare elektronische Einrichtung mechanisch mit der zweiten modularen elektronischen Einrichtung gekoppelt ist.

## Revendications

1. Procédé de communication entre un premier dispositif électronique modulaire et un deuxième dispositif électronique modulaire, dans lequel le premier dispositif électronique modulaire et le deuxième dispositif électronique modulaire font partie d'un relais de surcharge électronique modulaire, le procédé comprenant :
la transmission (312) d'une première trame de données en série du premier dispositif électronique modulaire au deuxième dispositif électronique modulaire, la première trame de données en série incluant au moins des informations d'état, une valeur d'interrogation de battements de coeur et un caractère de contrôle de trame ;
la réception (344) de la première trame de données en série par le deuxième dispositif électronique modulaire ;
la détection et la validation (348) de la valeur d'interrogation de battements de coeur dans la première trame de données en série par le deuxième dispositif électronique modulaire ;
la transmission (358) d'une seconde trame de données en série du deuxième dispositif électronique modulaire au premier dispositif électronique modulaire ; la seconde trame de données en série incluant au moins une réponse à l'interrogation de battements de coeur et une réponse au caractère de contrôle de trame ;
la réception de la seconde trame de données en série par le premier dispositif électronique modulaire ;
la détection et la validation (317) de la réponse à l'interrogation de battements de coeur dans la seconde trame de données en série par le premier dispositif électronique modulaire ; et
le placement du relais de surcharge modulaire dans un état de sécurité lorsque le premier dispositif électronique modulaire ne reçoit pas la réponse à l'interrogation de battements de coeur ou une réponse valide à l'interrogation de battements de coeur provenant du deuxième dispositif électronique modulaire.

2. Procédé selon la revendication 1,
incluant en outre l'affichage d'au moins une partie des informations d'état sur une interface humaine locale sur le deuxième dispositif électronique modulaire.

3. Procédé selon la revendication 1 ou 2,
dans lequel le premier dispositif électronique modulaire est couplé mécaniquement au deuxième dispositif électronique modulaire.

4. Procédé selon l'une des revendications 1 à 3,
incluant en outre la génération (321, 322) d'un état de défaut par le premier dispositif électronique modulaire lorsque le premier dispositif électronique modulaire ne reçoit pas au moins une de la réponse à l'interrogation de battements de coeur et de la réponse valide à l'interrogation de battements de coeur depuis le deuxième dispositif électronique modulaire ; et/ou
incluant en outre la génération (366, 368) d'un état de défaut par le deuxième dispositif électronique modulaire lorsque le deuxième dispositif électronique modulaire ne reçoit pas au moins une de la valeur d'interrogation de battements de coeur et de la valeur valide d'interrogation de battements de coeur depuis le premier dispositif électronique modulaire.

5. Procédé selon l'une des revendications 1 à 4,
dans lequel la première trame de données en série et la seconde trame de données en série sont communiquées en utilisant un protocole de communication à deux fils et dans lequel le protocole de communication à deux fils est un protocole I2C.

6. Procédé selon l'une des revendications 1 à 5,
dans lequel les informations d'état transmises par le premier dispositif électronique modulaire contiennent des informations d'état concernant le premier dispositif électronique modulaire et un troisième dispositif électronique modulaire.

7. Système de surcharge électronique modulaire comprenant :
un premier dispositif électronique modulaire (32) et un deuxième dispositif électronique modulaire (34) ;
le premier dispositif électronique modulaire pouvant être actionné pour transmettre une première trame de données en série (293) au deuxième dispositif électronique modulaire, la première trame de données en série incluant au moins des informations d'état (296), une valeur d'interrogation de battements de coeur (298) et un caractère de contrôle de trame (299) ;
le deuxième dispositif électronique modulaire pouvant être actionné pour recevoir la première trame de données en série depuis le premier dispositif électronique modulaire ;
le deuxième dispositif électronique modulaire pouvant être actionné pour valider la valeur d'interrogation de battements de coeur ;
le deuxième dispositif électronique modulaire pouvant être actionné pour transmettre une seconde trame de données en série (306) au premier dispositif électronique modulaire ; la seconde trame de données en série incluant une réponse à l'interrogation de battements de coeur (303) et une réponse au caractère de contrôle de trame (304) ;
au moins un du premier dispositif électronique modulaire et du deuxième dispositif électronique modulaire pouvant être actionné pour générer un état de défaut indiquant une erreur de communication entre le premier dispositif électronique modulaire et le deuxième dispositif électronique modulaire ; et
le premier dispositif électronique modulaire pouvant être actionné pour mettre le relais de surcharge modulaire (20) dans un état de sécurité lorsqu'aucune réponse à l'interrogation de battements de coeur n'est reçue par le premier dispositif électronique modulaire, indiquant une perte de la communication en série entre le premier dispositif électronique modulaire et le deuxième dispositif électronique modulaire.

8. Système selon la revendication 7,
dans lequel le deuxième dispositif électronique modulaire comporte une interface humaine locale (140) l'interface humaine locale comportant une pluralité de voyants indicateurs (142) pouvant être actionnés pour afficher au moins une partie des informations d'état, et dans lequel l'interface humaine locale présente l'au moins une partie des informations d'état à un utilisateur par au moins un de la commutation des voyants indicateurs dans une pluralité de motifs et l'éclairage des voyants indicateurs dans une pluralité de couleurs.

9. Système selon la revendication 7,
dans lequel le premier dispositif électronique modulaire est un module de commande et le deuxième dispositif électronique modulaire est un module de communication.

10. Système selon l'une des revendications 7 à 9,
dans lequel la trame de données en série est communiquée en utilisant un protocole de communication à deux fils et dans lequel le protocole de communication à deux fils est un protocole I2C.

11. Système selon l'une des revendications 7 à 10,
dans lequel :
les informations d'état transmises par le premier dispositif électronique modulaire contiennent des informations d'état concernant le premier dispositif électronique modulaire et un troisième dispositif électronique modulaire (30) ; et/ou
lorsque le premier dispositif électronique modulaire reçoit une réponse invalide à l'interrogation de battements de coeur, le premier dispositif électronique modulaire génère un défaut de communication ; et/ou
lorsque le deuxième dispositif électronique modulaire reçoit une valeur invalide à l'interrogation de battements de coeur, le deuxième dispositif électronique modulaire génère un défaut de communication.

12. Système selon l'une des revendications 7 à 11,
dans lequel le premier dispositif électronique modulaire peut être actionné pour mettre le système de surcharge électronique modulaire dans un état de sécurité lorsqu'un nombre prédéterminé de valeurs invalides de réponse aux battements de coeur sont reçues par le premier dispositif électronique modulaire, indiquant une perte de communication en série entre le premier dispositif électronique modulaire et le deuxième dispositif électronique modulaire.

13. Système selon la revendication 8,
dans lequel l'au moins une partie des informations d'état affiché sur l'interface humaine locale reçoit une priorité fondée sur un type d'informations d'état.

14. Système selon l'une des revendications 8 à 13, dans lequel
le premier dispositif électronique modulaire est couplé mécaniquement au deuxième dispositif électronique modulaire.
